# EUROPEAN PATENT SPECIFICATION

(11) **EP 4 363 070 B1**
(45) Date of publication and mention of the grant of the patent: **01.10.2025**
(21) Application number: 21948607.3
(22) Date of filing: 29.06.2021
(51) Int. Cl.: A63F 13/24, A63F 13/235, A63F 13/21, G06F 1/16, A63F 13/98, A63F 13/323

(54) **CONTROLLER FOR PORTABLE ELECTRONIC DEVICE**
STEUERUNG FÜR TRAGBARE ELEKTRONISCHE VORRICHTUNG
DISPOSITIF DE COMMANDE POUR DISPOSITIF ÉLECTRONIQUE PORTABLE

(43) Date of publication of application: 08.05.2024
(73) Proprietor: Razer (Asia-Pacific) Pte. Ltd., Singapore 138538 (SG)
(72) Inventor: GUERRERO, Gil, Palma, Jr., Singapore 138538 (SG); CHEN, Yifeng, Singapore 138538 (SG)
(74) Representative: Viering, Jentschura & Partner mbB Patent- und Rechtsanwälte
(86) International application number: PCT/SG2021/050381
(87) International publication number: WO 2023/277785

(56) References cited:
- CN-A- 109 999 484
- CN-A- 110 478 894
- CN-U- 205 510 174
- CN-U- 211 273 525
- CN-U- 211 435 054
- US-A1- 2014 364 231
- US-A1- 2017 056 762

## Description

### Technical Field

Various embodiments generally relate to a controller for a portable electronic device or a set of controllers. In particular, various embodiments generally relate to a game controller for a portable electronic device or a set of game controllers.

### Background

Conventionally, a game controller for a portable electronic device (PED), such as a smartphone, a mobile phones, a tablet, or any suitable handheld, lightweight electronic devices, has limitation in terms of compatibility with PED of various shape and sizes (e.g. length, width, height or thickness). Thus, conventional game controllers as e.g. disclosed in CN109999484A are usually customized or specifically configured for a specific limited range of PED and the user would be required to new game controller when switching to a PED not within the specific range. This limitation is further aggravated with the use of PED cases for protection of the PED, whereby PED cases have different thickness changing the overall dimensions of the PED.

Accordingly, there is a need for a more effective and versatile game controllers for using with PED.

### Summary

According to various embodiments, there is provided a controller for a portable electronic device. The controller including a controller body. The controller body including a main body portion having a control-surface with one or more input-elements, and a support-panel portion extending sideway from the main body portion. The support-panel portion has a backing-surface directed in a same direction as the control-surface of the main body portion. The backing-surface has an edge segment demarcating a boundary between the main body portion and the support-panel portion. The controller including an extension unit slidably coupled to the support-panel portion of the controller body in a manner so as to be slidable with respect to the support-panel portion along a sliding axis parallel to the backing-surface of the support-panel portion. The extension unit including an extension arm, and a stopper member at an outer end of the extension arm exposed outside the support-panel portion. The extension arm is retractably extendable from the support-panel portion in a manner so as to slide the stopper member along the sliding axis away from or towards the support-panel portion. The stopper member of the extension unit is retractably extendable from the outer end of the extension arm along an extension axis extending perpendicularly away from the extension arm, the extension axis being perpendicular to the backing surface of the support-panel portion. The stopper member including an overhang portion extending over a region of the extension arm in a direction from the outer end of the extension arm towards an inner end of the extension arm. The stopper member of the extension unit is operable to clamp the portable electronic device along a thickness direction of the portable electronic device for removably attaching the controller to the portable electronic device.

According to various embodiments, there is provided a controller set. The controller set including a pair of controllers, each of the pair of controllers being as described herein. The pair of controllers are attachable to each other in a manner so as to be in a complementary arrangement with the support-panel portions of the pair of controllers respectively overlapping each other and the main body portions of the pair of controllers on two opposite sides.

### Brief description of the drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1A shows a set of controllers coupled together according to various embodiments;
FIG. 1B shows the set of controllers of FIG. 1A disassembled and separated from each other according to various embodiments;
FIG. 2A shows a side view of one of the controller of FIG. 1A with an attachment mechanism in an original state (or unused state) according to various embodiments;
FIG. 2B shows a cross-sectional view of the controller of FIG. 2A according to various embodiments;
FIG. 2C shows a side view of the controller of FIG. 2A with an attachment mechanism 130 in a deployed state according to various embodiments;
FIG. 2D shows a cross-sectional view of the controller of FIG. 2C according to various embodiments;
FIG. 3A shows an example of an extension unit for the controller of FIG. 2A according to various embodiments;
FIG. 3B shows an example of a slider bracket for a stopper-member-biasing mechanism of the extension unit of FIG. 3A according to various embodiments;
FIG. 3C shows a cross-sectional view of an example of a stopper member with the stopper-member-biasing mechanism of the extension unit of FIG. 3A according to various embodiments;
FIG. 3D shows an exploded view of an example of the stopper-member-biasing mechanism and an extension arm biasing mechanism of the extension unit of FIG. 3A according to various embodiments;
FIG. 4A shows another example of an extension unit for the controller of FIG. 2A according to various embodiments;
FIG. 4B shows another example of a slider bracket for a stopper-member-biasing mechanism of the extension unit of FIG. 4A according to various embodiments;
FIG. 4C shows a cross-sectional view of another example of a stopper member of the extension unit of FIG. 4A according to various embodiments;
FIG. 4D shows an exploded view of another example of the stopper-member-biasing mechanism and the extension arm biasing mechanism of the extension unit of FIG. 4A according to various embodiments;
FIG. 5A shows a back of the support-panel potion of the controller body of one of the controller of FIG. 1A with an extension-locking mechanism in a locking position according to various embodiments;
FIG. 5B shows a cross-section of the back of the support-panel potion of the controller body of FIG. 5A according to various embodiments;
FIG. 5C shows the back of the support-panel potion of the controller body of FIG. 5A with the extension-locking mechanism in a retracted position according to various embodiments;
FIG. 5D shows a cross-section of the back of the support-panel potion of the controller body of FIG. 5C according to various embodiments;
FIG. 5E shows a cut away view from an underside of the support-panel potion of the controller body to reveal an extension-locking member 1of the extension-locking mechanism and the extension unit according to various embodiments;
FIG. 5F shows a pusher member of the extension-locking mechanism according to various embodiments;
FIG. 6A shows the other controller of FIG. 1A with a connector assembly according to various embodiments;
FIG. 6B shows a cross-sectional view of FIG. 6A according to various embodiments;
FIG. 6C shows the connector assembly of the controller of FIG. 6A according to various embodiments;
FIG. 6D shows an exploded view of the connector assembly of the controller of FIG. 6A according to various embodiments;
FIG. 7 shows a cross-sectional view of a back of the controller according to various embodiments; and
FIG. 8 shows another view of the controller of FIG. 2A with a first interlocking element and a second interlocking element according to various embodiments.

### Detailed description

Embodiments described below in the context of the apparatus are analogously valid for the respective methods, and vice versa. Furthermore, it will be understood that the embodiments described below may be combined, for example, a part of one embodiment may be combined with a part of another embodiment.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, or structure or any part of any device or structure. In addition, the singular terms "a", "an", and "the" include plural references unless context clearly indicates otherwise. Similarly, the word "or" is intended to include "and" unless the context clearly indicates otherwise.

Various embodiments generally relate to a controller for a portable electronic device (PED) or a set of controllers. In particular, various embodiments generally relate to a game controller for a portable electronic device (PED) or a set of game controllers. According to various embodiments, the PED may include a smartphone, a mobile phones, a tablet, or any suitable handheld, lightweight electronic devices. According to various embodiments, the controller may serve as an input device for used with the PED to provide input to the PED for controlling certain functions of an application running on the PED. In particular, the controller may be game controller for providing input to the PED for controlling an object or character in a game application running on the PED. According to various embodiments, the controller may be removably attachable to the PED. According to various embodiments, the controller may be connected to the PED via wired or wireless connection for providing input to the PED.

According to various embodiments, the controller may include attachment mechanism for removably attaching the controller to the PED. According to various embodiments, the attachment mechanism may include an extension unit having an extension arm extendable horizontally to accommodate a range of PED's width for clamping across the width of the PED and a stopper member at the end of the extension arm extendable vertically to accommodate a range of PED's thickness for clamping the PED in the thickness direction.

According to various embodiments, the controller may include a connector assembly wherein a position of a connector head of the connector assembly may be moved or changed so as to adjust the position of the connector head for fitting to a wide range of PED when the controller is attached to the PED.

According to various embodiments, the set of controllers may include a pair of controllers wherein each of the controllers is shaped in a manner so as to enable the pair of controllers to fit to each other in an overlapping manner so as to be compact for storage.

According to various embodiments, the set of controllers may be configured such that upon attaching the set of controllers to the PED, the set of controllers may be automatically paired via Bluetooth connection.

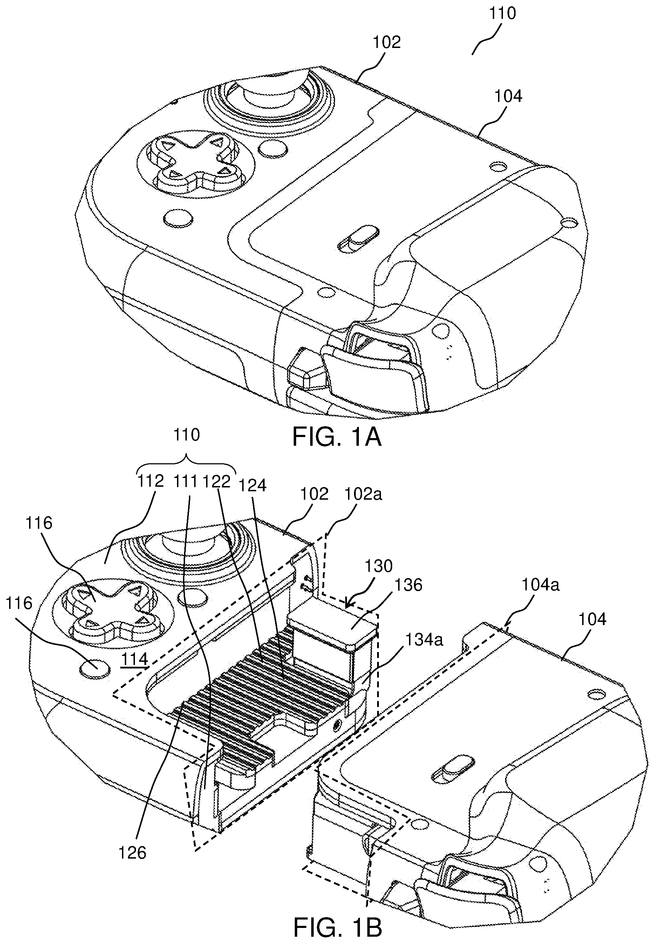

FIG. 1A shows a set of controllers 102, 104 coupled together according to various embodiments. FIG. 1B shows the set of controllers 102, 104 of FIG. 1A disassembled and separated from each other according to various embodiments. According to various embodiments, the set of controllers 102, 104 may include a pair of controllers 102, 104. According to various embodiments, the set of controllers 102, 104 may include a first controller 102 and a second controller 104. According to various embodiments, each of the pair of controllers 102, 104 may be configured to fit to each other in an overlapping manner. Accordingly, the pair of controllers 102, 104 may be configured for coupling in a complementary arrangement so as to form a compact assembly for storage. Hence, each of the pair of controllers 102, 104 may include an overlap interface 102a, 104a (demarcated by dashed lines in FIG. 1B) for meshing or interconnecting or coupling the pair of controllers 102, 104 together. According to various embodiments, when the pair of controllers 102, 104 are disassembled, the first controller 102 may be removably attached to an end (e.g. a longitudinal end) of a portable electronic device (PED) and the second controller 104 may be removably attached to an opposite end (e.g. an opposite longitudinal end) of the portable electronic device. Accordingly, a user may hold the first controller 102 with one hand and the second controller 104 with another hand so as to suspend the portable electronic device between the pair of controllers 102, 104. According to various embodiments, the portable electronic device may include a smartphone, a mobile phones, a tablet, or any suitable handheld, lightweight electronic devices. According to various embodiments, the user may use the pair of controllers 102, 104 as input devices to provide input to the portable electronic device for controlling certain functions of an application running on the portable electronic device. For example, when a game application is running on the portable electronic device, the pair of controllers 102, 104 may be used to provide input to the portable electronic device for controlling an object or character in the game application running on the portable electronic device.

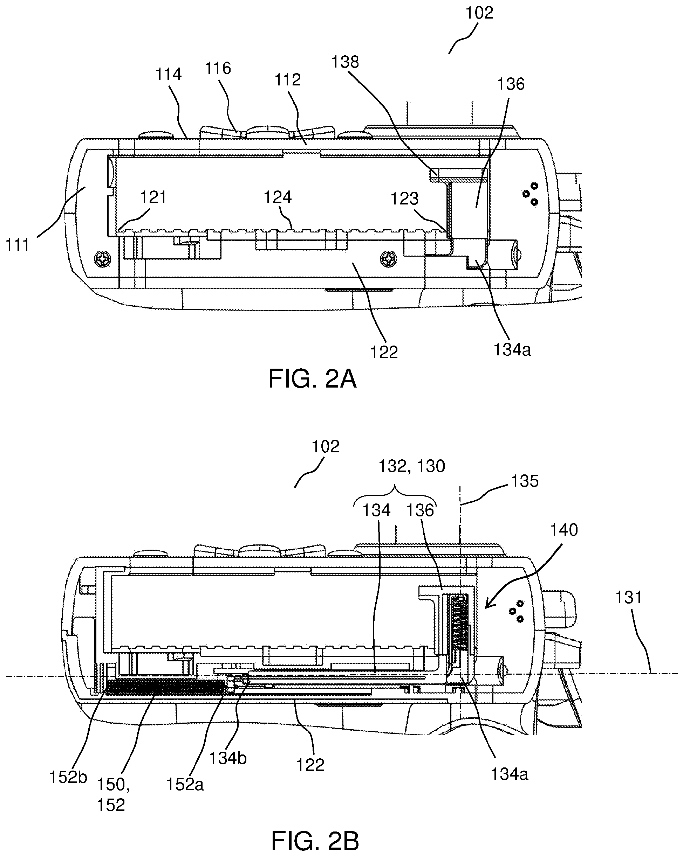

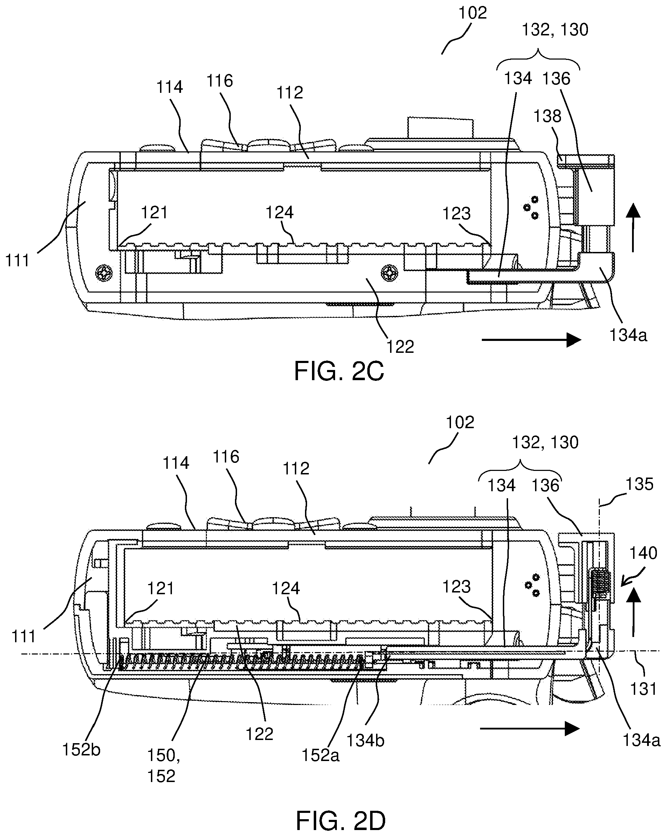

FIG. 2A shows a side view of the first controller 102 with an attachment mechanism 130 in an original state (or unused state) according to various embodiments. FIG. 2B shows a cross-sectional view of FIG. 2A according to various embodiments. FIG. 2C shows a side view of the first controller 102 with an attachment mechanism 130 in a deployed state according to various embodiments. FIG. 2D shows a cross-sectional view of FIG. 2C according to various embodiments. While only the first controller 102 is illustrated in FIG. 2A to FIG. 2D, it is understood that the second controller 104 may contain the same or similar attachment mechanism 130 and have the same or similar controller body 110 as shown.

According to various embodiments, with reference to FIG. 1B, each of the controller 102, 104 may include a controller body 110. According to various embodiments, the controller body 110 may include a main body portion 112 including a control-surface 114 with one or more input-elements 116. Accordingly, the main body portion 112 of the controller body 110 of the controller 102, 104 may be held or grip by the user for interacting with the one or more input-elements 116 to provide inputs. According to various embodiments, the control-surface 114 may be a surface of the main body portion 112 containing the main or primary input-elements 116 of the controller 102, 104, including but not limited to, a directional pad, a thumb stick, or "A, B, X, Y" buttons. According to various embodiments, the control-surface 114 may be the surface which the user may place a thumb of the user for with the one or more input-elements 116. According to various embodiments, the main body portion 112 of the controller body 110 may be ergonomically configured for the user to hold or grip such that the thumb of the user may move across the control-surface 114 of the main body portion 112 of the controller body 110 for interacting with the different input-elements 116.

According to various embodiments, the controller body 110 may include a support-panel portion 122. According to various embodiments, the support-panel portion 122 may be extending sideway from the main body portion 112. Accordingly, the support-panel portion 122 and the main body portion 112 may be in a side-by-side arrangement wherein the support-panel portion 122 may be a lateral extension of the main body portion 112. According to various embodiments, the support-panel portion 122 may include a backing-surface 124 directed in a same direction as the control-surface 114 of the main body portion 112. Accordingly, both the backing-surface 124 of the support-panel portion 122 and the control-surface 114 of the main body portion 112 may be facing the same direction. According to various embodiments, the backing-surface 124 may include an edge segment 126 demarcating a boundary between the main body portion 112 and the support-panel portion 122. Accordingly, the edge segment 126 may extend along the boundary between the main body portion 112 and the support-panel portion 122. Hence, the edge segment 126 may be a transition between the main body portion 112 and the support-panel portion 122 defining where the support-panel portion 122 ends and where the main body portion 112 begins. Thus, the edge segment 126 may be a line or border at which the backing-surface 124 terminates.

According to various embodiments, the attachment mechanism 130 may be disposed at the support-panel portion 122. According to various embodiments, the attachment mechanism 130 may be configured to removably attach the controller 102, 104 to the portable electronic device. Accordingly, the attachment mechanism 130 may be operable to attach to the portable electronic device in a manner so as to be removable. According to various embodiments, the attachment mechanism 130 may utilise one or a combination of a clamping engagement, a mechanical joining, a catch or latch engagement, a clip engagement, a snap-fitting engagement, an elastic action, a spring/bias action, a friction engagement, an adhesive engagement, a suction action, vacuum engagement, or a magnetic action for non-permanently attaching or joining the controller 102, 104 to the portable electronic device such that they can be removed without damaging the portable electronic device. According to various embodiments, the attachment mechanism 130 may be movable relative to the support-panel portion 122 for removably attaching to the portable electronic device. Accordingly, the portable electronic device may be placed or received on the support-panel portion 122 with a back of the portable electronic device abutting the backing-surface 124 of the support-panel portion 122 and the attachment mechanism 130 may be operated or moved to engage the portable electronic device so as to attach or join or couple the controller 102, 104 and the portable electronic device together.

FIG. 2A to FIG. 2D illustrate an example of the attachment mechanism 130 according to various embodiments. According to various embodiments, the attachment mechanism 130 may be in the form of an extension unit 132. According to various embodiments, the extension unit 132 may be configured to removably attach the controller 102, 104 to the portable electronic device via clamping. According to various embodiments, the extension unit 132 may be slidably coupled to the support-panel portion 122 of the controller body 110. Accordingly, the extension unit 132 may be slidable with respect to the support-panel portion 122 along a sliding axis 131 parallel to the backing-surface 124 of the support-panel portion 122. Hence, the extension unit 132 may slide relative to the backing-surface 124 of the support-panel portion 122 in a parallel manner. According to various embodiments, the extension unit 132 may slide between an extended disposition and a retracted disposition. In the extended disposition, the extension unit 132 may form an extension of the support-panel portion 122 whereby the extension unit 132 may be protruding laterally from the support-panel portion 122 so as to increase the reach of the support-panel portion 122 for supporting a back of the portable electronic device. In the retracted disposition, the extension unit 132 may be inserted into and/or overlapped with the support-panel portion 122 such that the extension unit 132 may no longer be protruding laterally from the support-panel portion 122.

According to various embodiments, the extension unit 132 may include an extension arm 134 and a stopper member 136 at an outer end 134a (or distal end) of the extension arm 134. According to various embodiments, the outer end 134a of the extension arm 134 may be exposed outside the support-panel portion 122 such that the stopper member 136 may be outside the support-panel portion 122. Accordingly, the stopper member 136 and the outer end 134a of the extension arm 134 may be visible and accessible from outside of the support-panel portion 122. Hence, the stopper member 136 and the outer end 134a of the extension arm 134 may be situated outside the support-panel portion 122.

According to various embodiments, the extension arm 134 of the extension unit 132 may be retractably extendable from the support-panel portion 122 in a manner so as to slide the stopper member 136 along the sliding axis 131 away from or towards the support-panel portion 122. Accordingly, the extension arm 134 may be extended out of the support-panel portion 122 such that the stopper member 136 may be moved to a position away from the support-panel portion 122. Further, the extension arm 134 may be retracted with respect to the support-panel portion 122 (e.g. inserted into and/or overlapped with the support-panel portion 122) such that the stopper member 136 may be abutting the support-panel portion 122. According to various embodiments, the extension arm 134 of the extension unit 132 may be extendable such that the portable electronic devices of varying sizes may be fitted to the controller 102, 104 with the back of the portable electronic device abutting the backing-surface 124 of the support-panel portion 122 and the stopper member 136 of the extension unit 132 abutting a side of the portable electronic device.

According to various embodiments, the stopper member 136 of the extension unit 132 may be retractably extendable from the outer end 134a of the extension arm 134 along an extension axis 135 extending perpendicularly away from the extension arm 134. According to various embodiments, the extension axis 135 may be perpendicular to the sliding axis 131. According to various embodiments, the extension axis 135 may be perpendicular to the backing surface 124 of the support-panel portion 122. Accordingly, the stopper member 136 of the extension unit 132 may be extended perpendicularly away from the outer end 134a of the extension arm 134 so as to increase a height of the stopper member 136 from the extension arm 134. Hence, the stopper member 136 of the extension unit 132 may be moved perpendicularly with respect to the extension arm 134 between an unextended state and an extended state to vary a height of the stopper member 136.

According to various embodiments, the stopper member 136 may include an overhang portion 138 extending over a region of the extension arm 134 in a direction from the outer end 134a of the extension arm 134 towards and an inner end 134b of the extension arm 134. The inner end 134b of the extension arm 134 may be opposite the outer end 134a of the extension arm 134. Accordingly, the overhang portion 138 of the stopper member 136 may be protruding sideways in a direction parallel to the extension arm 134 and inwards towards the support-panel portion 122. Hence the overhang portion 138 may form an overhanging ledge over the region of the extension arm 134 towards the outer end 134a of the extension arm 134. According to various embodiments, the portable electronic device may be fitted to the controller 102, 104 with the extension arm 134 of the extension unit 132 and the overhang portion 138 of the stopper member 136 clamping across a thickness of the portable electronic device. With the stopper member 136 of the extension unit 132 being retractably extendable perpendicularly from the extension arm 134 of the extension unit 132, a spaced apart distance between the overhang portion 138 of the stopper member 136 and the extension arm 134 may be varied to accommodate different thickness of different portable electronic device. Accordingly, the stopper member 136 of the extension unit 132 may be operable to clamp the portable electronic device along a thickness direction of the portable electronic device for removably attaching the controller 102, 104 to the portable electronic device.

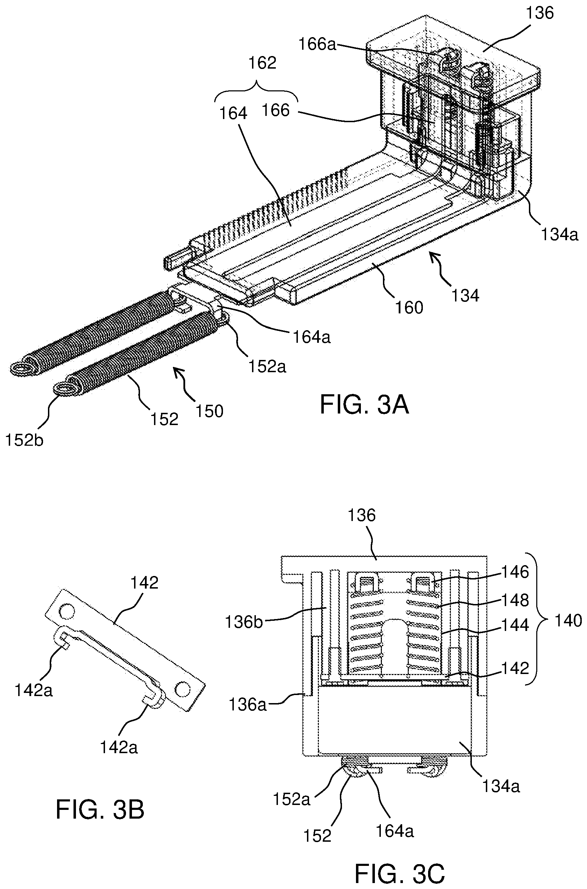

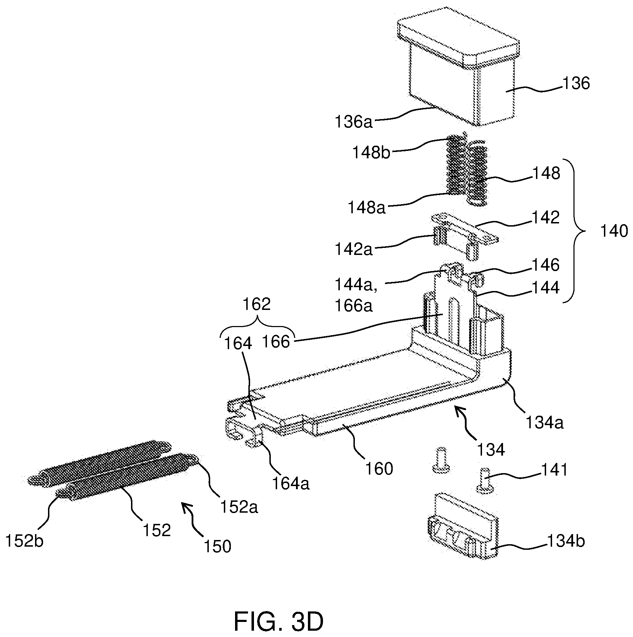

FIG. 3A shows an example of the extension unit 132 according to various embodiments. FIG. 3B shows an example of a slider bracket 142 for a stopper-member-biasing mechanism 140 of the extension unit 132 of FIG. 3A according to various embodiments. FIG. 3C shows a cross-sectional view of an example of the stopper member 136 of the extension unit 132 of FIG. 3A according to various embodiments. FIG. 3D shows an exploded view of an example of the stopper-member-biasing mechanism 140 and an extension arm biasing mechanism 150 of the extension unit 132 of FIG. 3A according to various embodiments.

According to various embodiments, the extension unit 132 may include the stopper-member-biasing mechanism 140. According to various embodiments, the stopper-member-biasing mechanism 140 may be coupled between the stopper member 136 and the outer end 134a of the extension arm 134. According to various embodiments, the stopper-member-biasing mechanism 140 may exert a biasing force against extending the stopper member 136 along the extension axis 135 perpendicularly away from the extension arm 134. Accordingly, the stopper-member-biasing mechanism 140 may be configured to bias the stopper member 136 in the unextended state. Hence, the stopper-member-biasing mechanism 140 may retract the stopper member 136 towards the extension arm 134 when a force pulling the stopper member 136 away from the outer end 134a of the extension arm 134 to extend the stopper member 136 perpendicularly is removed.

According to various embodiments, the stopper-member-biasing mechanism 140 may include the slider bracket 142. According to various embodiments, the slider bracket 142 may be fixedly attached the stopper member 136 so as to be located at a base 136a of the stopper member 136. For example, the slider bracket 142 may be fixedly attached to the base 136a of the stopper member 136 or the slider bracket 142 may be fixedly attached to an internal structure 136b of the stopper member 136 extending to the base 136a of the stopper member 136. According to various embodiments, the slider bracket 142 may include a sliding element 142a. As shown in FIG. 3B as an example, according to various embodiments, the sliding element 142a may be a pair of opposing grooves. According to various embodiments, the pair of opposing grooves may be formed by inward bends formed on two opposite edges of the slider bracket 142. Further, as shown in FIG. 3D as an example, the slider bracket 142 may be fixedly attached to the stopper member 136 via screws 141. Furthermore, the extension arm 134 may include a cover 134b on an underneath side of the extension arm 134 opposite the stopper member 136 for accessing the screws 141.

According to various embodiments, the stopper-member-biasing mechanism 140 may include at least one elongated slider-guide member 144. According to various embodiments, the at least one elongated slider-guide member 144 may be extending perpendicularly away from the outer end 134a of the extension arm 134 in a direction parallel to the extension axis 135 of the stopper member 136. Accordingly, the at least one elongated slider-guide member 144 may be parallel to the extension axis 135 of the stopper member 136. Hence, the at least one elongated slider-guide member 144 may be perpendicular to the extension arm 134. According to various embodiments, the stopper member 136 may be placed over the at least one elongated slider-guide member 144 with the sliding element 142a of the slider bracket 142 in sliding engagement with the at least one elongated slider-guide member 144. Accordingly, the at least one elongated slider-guide member 144 may serve as a guide for the slider bracket 142 such that the slider bracket 142 may be slidable along the at least one elongated slider-guide member 144 so as to slide the stopper member 136 along the extension axis 135. Hence, the sliding motion of the stopper member 136 along the extension axis 135 may be provided by the sliding motion of the slider bracket 142 along the at least one elongated slider-guide member 144. As shown in FIG. 3D as an example, when the sliding element 142a of the slider bracket 142 is the pair of opposing grooves, the at least one elongated slider-guide member 144 may be an elongated plate (parallel to the extension axis 135) whereby the pair of opposing grooves may be fitted over the two opposite longitudinal edges of the elongated plate such that the slider bracket 142 may be slidable along the elongated plate longitudinally.

According to various embodiments, the stopper-member-biasing mechanism 140 may include at least one spring retainer 146. According to various embodiments, the at least one spring retainer 146 may be at a tip 144a (distal end) of the at least one elongated slider-guide member 144. Accordingly, the at least one spring retainer 146 may be situated at a point of the at least one elongated slider-guide member 144 farthest from the outer end 134a of the extension arm 134. According to various embodiments, when the stopper member 136 is fitted over the at least one elongated slider-guide member 144, the at least one spring retainer 146 at the tip 144a of the at least one elongated slider-guide member 144 may be within the stopper member 136 and the slider bracket 142 at the base 136a of the stopper member 136 may be spaced apart from the at least one spring retainer 146. Accordingly, the at least one spring retainer 146 may be disposed within the stopper member 136 and away from the slider bracket 142 at the base 136a of the stopper member 136. Hence, the at least one elongated slider-guide member 144 may be inserted into the stopper member 136 via the base 136a of the stopper member 136 such that the at least one spring retainer 146 at the tip 144a of the at least one elongated slider-guide member 144 may be located deep within the stopper member 136 and away from the slider bracket 142 at the base 136a of the stopper member 136. According to various embodiments, the stopper member 136 may be fitted over the at least one elongated slider-guide member 144 with the at least one spring retainer 146 opposing the slider bracket 142 at the base 136a of the stopper member 136. As shown in FIG. 3D as an example, the at least one spring retainer 146 may be in the form of a three-pronged structure directed towards the outer end 134a of the extension arm 134. For example, the three-pronged structure may be formed by bending.

According to various embodiments, the stopper-member-biasing mechanism 140 may include at least one compression spring 148. According to various embodiments, the at least one compression spring 148 may be fitted alongside the at least one elongated slider-guide member 146 between the slider bracket 142 and the at least one spring retainer 146. According to various embodiments, a first end 148a of the at least one compression spring 148 may abut the slider bracket 142 and a second end 148b of the at least one compression spring 148 may be retained by the at least one spring retainer 142. Accordingly, the at least one compression spring 148 may be disposed within the stopper member 136 and between the slider bracket 142 at the base 136a of the stopper member 136 and the at least one spring retainer 146 within the stopper member 136. Hence, the at least one compression spring 148 may maintain or keep the slider bracket 142 at the base 136a of the stopper member 136 and the at least one spring retainer 146 within the stopper member 136 apart from each other. According to various embodiments, the at least one compression spring 148 may be compressed to exert a biasing force to push apart the slider bracket 142 and the at least one spring retainer 146 when the stopper member 136 is extended perpendicularly away from the extension arm 134 along the extension axis 135. Accordingly, extending the stopper member 136 perpendicularly away from the extension arm 134 along the extension axis 135 may compress the at least one compression spring 148 between the slider bracket 142 and the at least one spring retainer 146 such that the at least one compression spring 148 may provide the biasing force to retract the stopper member 136 towards the outer end 134a of the extension arm 134 upon removal of the force extending the stopper member. As shown in FIG. 3D as an example, according to various embodiments, the stopper-member-biasing mechanism 140 may include two compression springs 148 and two spring retainers 146 at the tip 144a of the at least one elongated slider-guide member 144.

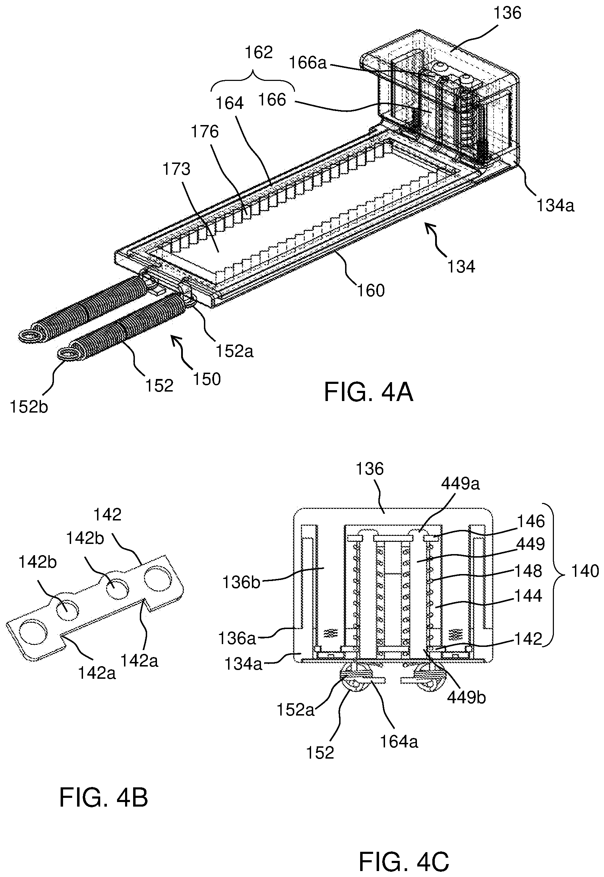

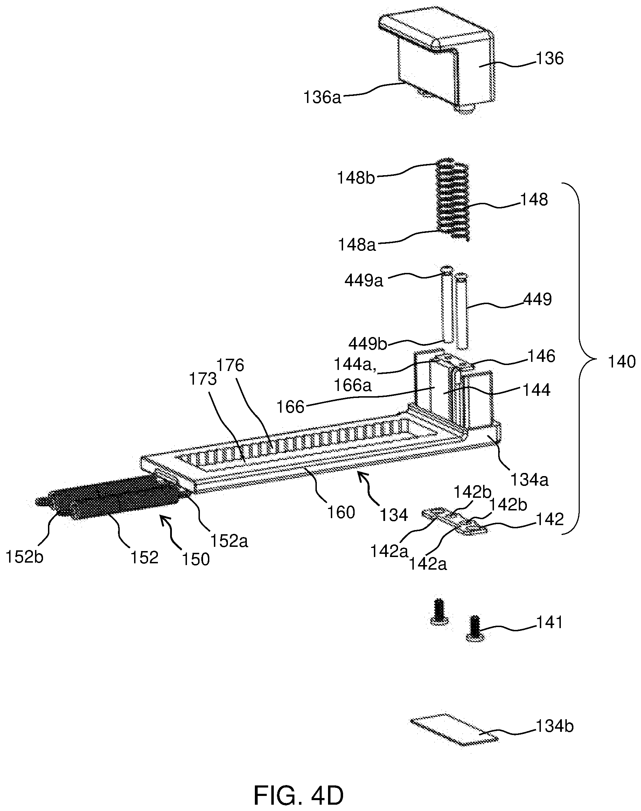

FIG. 4A shows another example of the extension unit 132 according to various embodiments. FIG. 4B shows another example of a slider bracket 142 for a stopper-member-biasing mechanism 140 of the extension unit 132 of FIG. 4A according to various embodiments. FIG. 4C shows a cross-sectional view of another example of the stopper member 136 of the extension unit 132 of FIG. 4A according to various embodiments. FIG. 4D shows an exploded view of another example of the stopper-member-biasing mechanism 140 and the extension arm biasing mechanism 150 of the extension unit 132 of FIG. 4A according to various embodiments.

In addition to the features as described for the extension unit 132 with reference to FIG. 3A to FIG. 3D, according to various embodiments, the stopper-member-biasing mechanism 140 of the extension unit 132 may further include at least one elongated spring guide member 449 as shown in FIG. 4A, 4C and 4D. According to various embodiments, the at least one elongated spring guide member 449 may be arranged parallel to the at least one elongated slider-guide member 144 with a first end 449a of the at least one elongated spring-guide member 449 coupled to the at least one spring retainer 146 at the tip 144a of the at least one elongated slider-guide member 144. Accordingly, the at least one elongated spring guide member 449 may be suspended from the at least one spring retainer 146 at the tip 144a of the at least one elongated slider-guide member 144 in a manner parallel to the at least one elongated slider-guide member 144. Hence, the first end 449a of the at least one elongated spring-guide member 449 may hang from the at least one spring retainer 146 at the tip 144a of the at least one elongated slider-guide member 144 so as to extend longitudinally downwards and parallel to the at least one elongated slider-guide member 144.

According to various embodiments, with the at least one elongated spring guide member 449 suspending downwards from the at least one spring retainer 146 at the tip 144a of the at least one elongated slider-guide member 144, the at least one elongated spring-guide member 449 may be inserted through the at least one compression spring 148. Accordingly, the at least one compression spring 148 may be fitted over the at least one elongated spring-guide member 449 with the second end 148b of the at least one compression spring 148 abutting and retained by the at least one spring retainer 142.

According to various embodiments, the slider bracket 142 may include at least one spring-guide-member hole 142b through which a second end 449b of the at least one elongated spring-guide member 449 may be inserted such that the slider bracket 142 may be slidable along the at least one elongated spring-guide member 449. According to various embodiments, the second end 449b of the at least one elongated spring-guide member 449 may be inserted through the at least one spring-guide-member hole 142b of the slider bracket 142. Accordingly, the at least one elongated spring-guide member 449 may serve as a guide for the at least one compression spring 148 as well as a guide for the slider bracket 142 such that the slider bracket 142 may slide along the at least one elongated spring-guide member 449 via the at least one spring-guide-member hole 142b.

According to various embodiments, the example of the slider bracket 142 as shown in FIG. 4B may differ from the example as shown in FIG. 3B in that the sliding element 142a of FIG. 4B may be a pair of opposing edges. According to various embodiments, the pair of opposing edges may be formed by cutting. Accordingly, the slider bracket 142 of FIG. 4B may be fitted over the at least one elongated slider-guide member 144 with the opposing edges abutting two opposite longitudinal edges of the at least one elongated slider-guide member 144 so as to be slidable along the at least one elongated slider-guide member 144. According to various embodiments, the example of the at least one spring retainer 146 as shown in FIG. 4D may differ from the example as shown in FIG. 3D in that the at least one spring retainer 146 of FIG. 4D may be a plate with at least one hole for coupling with the first end 449a of the at least one elongated spring-guide member 449. Further, when the there are two compression springs 148, the stopper-member-biasing mechanism 140 may include two elongated spring-guide members 449 coupled to the at least one spring retainer 146 of FIG. 4D.

Referring to FIG. 3A, FIG. 3D, FIG. 4A and FIG. 4D, the controller 102, 104 may include the extension-arm-biasing mechanism 150. According to various embodiments, the extension-arm-biasing mechanism 150 may be coupled between the support-panel portion 122 of the controller body 110 and the extension unit 132. According to various embodiments, the extension-arm-biasing mechanism 150 may exert a biasing force against extending the extension unit 132 along the sliding axis 131 away from the support-panel portion 122. Accordingly, the extension-arm-biasing mechanism 150 may be configured to bias the extension unit 132 in the retracted disposition. Hence, the extension-arm-biasing mechanism 150 may retract the extension unit 132 from the extended disposition to the retracted disposition when a force pulling the extension unit 132 into the extended disposition along the sliding axis 131 is removed.

According to various embodiments, the extension-arm-biasing mechanism 150 may include at least one tension spring 152. According to various embodiments, the at least one tension spring 152 may be oriented parallel to the sliding axis 131 with a first end 152a of the at least one tension spring 152 attached to the inner end 134b of the extension arm 134 of the extension unit 132 and a second end 152b of the at least one tension spring 152 attached to the support-panel portion 122. Accordingly, the at least one tension spring 152 may exert a biasing force to bring together the extension arm 134 of the extension unit 132 and the support-panel portion 122 when the extension arm 134 of the extension unit 132 is extended away from the support-panel portion 122 along the sliding axis 131.

Accordingly, extending the extension arm 134 of the extension unit 132 is extended away from the support-panel portion 122 along the sliding axis 131 may corresponding extend the at least one tension spring 152 between the inner end 134b of the extension arm 134 of the extension unit 132 and the support-panel portion 122 such that the at least one tension spring 152 may provide the biasing force to retract the extension arm 134 of the extension unit 132 with respect to the support-panel portion 122 upon removal of the force extending the extension arm 134 of the extension unit 132. As shown in FIG. 3A, FIG. 3D, FIG. 4A and FIG. 4D as an example, according to various embodiments, the extension-arm-biasing mechanism 150 may include two tension springs 152.

According to various embodiments, the second end 152b of the at least one tension spring 152 may be attached to a region of the support-panel portion 122 opposite the side of the support-panel portion 122 from which the outer end 134a of the extension arm 134 and the support member 136 is exposed. Accordingly, in the retracted disposition, the extension arm 134 may be inserted into and/or overlapped with a portion of the support-panel portion 122 between the region of the support-panel portion 122 to which the second end 152b of the at least one tension spring 152 may be attached and the side of the support-panel portion 122 from which the outer end 134a of the extension arm 134 and the support member 136 is exposed.

According to various embodiments, the extension arm 134 of the extension unit 132 may include an elongated structure 160. According to various embodiments, the elongated structure 160 of the extension arm 134 may be slidably inserted into the support-panel portion 122 of the controller body 110 so as to extend longitudinally inwards along the sliding axis 131 within the support-panel portion 122. Accordingly, in the retracted disposition, the elongated structure 160 of the extension arm 134 may be inside the support-panel portion 122 so as to be concealed and enclosed by the support-panel portion 122. Hence, extending the extension arm 134 of the extension unit 132 to the extended disposition may slide the elongated structure 160 of the extension arm 134 out of the support-panel portion 122.

According to various embodiments, the extension arm 134 of the extension unit 132 may include at least one integral L-shaped plate 162. According to various embodiments, a longer section 164 of the L-shaped plate 162 may be embedded in the elongated structure 160 of the extension arm 134. Accordingly, the longer section 164 of the L-shaped plate 162 may serve as a backbone or a skeleton of the elongated structure 160 of the extension arm 134 that extends within the elongated structure 160 of the extension arm 134. According to various embodiments, the longer section 164 of the L-shaped plate 162 may be extending longitudinally along the elongated structure 160. Hence, the longer section 164 of the L-shaped plate 162 may be along or parallel to the sliding axis 131 of the extension arm 134. According to various embodiments, a free end 164a of the longer section 164 of the L-shaped plate 162 may be coupled to the first end 152a of the at least one tension spring 152. Accordingly, the at least one tension spring 152 may be directly coupled to the free end 164a of the longer section 164 of the L-shaped plate 162 embedded within the elongated structure 160. Hence, the at least one tension spring 152 may be coupled to the backbone or the skeleton of the extension arm 134 of the extension unit 132.

According to various embodiments, a shorter foot section 166 of the L-shaped plate 162 may be extending perpendicularly away from the extension arm 134 to form the elongated slider-guide member 144 with the at least one spring retainer 146 at a free-end 166a of the shorter foot section 166 of the L-shaped plate 162 to hold the second end 148b of the at least one compression spring 148. Accordingly, the shorter foot section 166 of the L-shaped plate 162 may be parallel to the extension axis 135 of the support member 136 whereby the shorter foot section 166 of the L-shaped plate 162 may serve as the elongated slider-guide member 144 of the stopper-member-biasing mechanism 140. Further, the at least one spring retainer 146 of the stopper-member-biasing mechanism 140 may be at a free-end 166a of the shorter foot section 166 of the L-shaped plate 162. According to various embodiments, the shorter foot section 166 of the L-shaped plate 162 may protrude from and/or penetrate through the elongated structure 160 of the extension arm 134 so as to be extending from the outer end 134a of the extension arm 134.

According to various embodiments, with the free end 164a of the longer section 164 of the L-shaped plate 162 may be coupled to the at least one tension spring 152 of the extension-arm-biasing mechanism 150 and the at least one spring retainer 146 of the stopper-member-biasing mechanism 140 at the free-end 166a of the shorter foot section 166 of the L-shaped plate 162 retaining the at least one compression spring 148 of the stopper-member-biasing mechanism 140, the L-shaped plate 162 may serve as an interconnecting structure between the extension-arm-biasing mechanism 150 and the stopper-member-biasing mechanism 140 which provides a durable and reliable extension unit 132 of the controller 102, 104 operable to removably attach the controller 102, 104 to the portable electronic device.

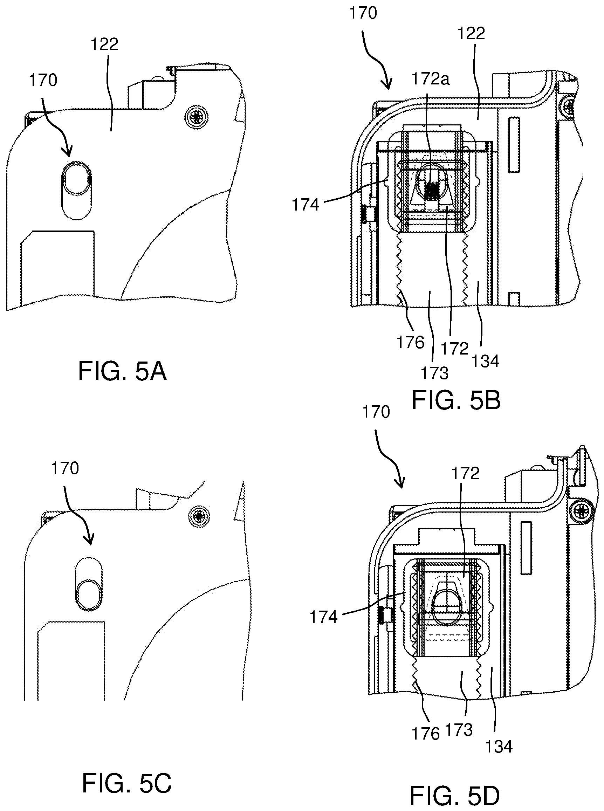

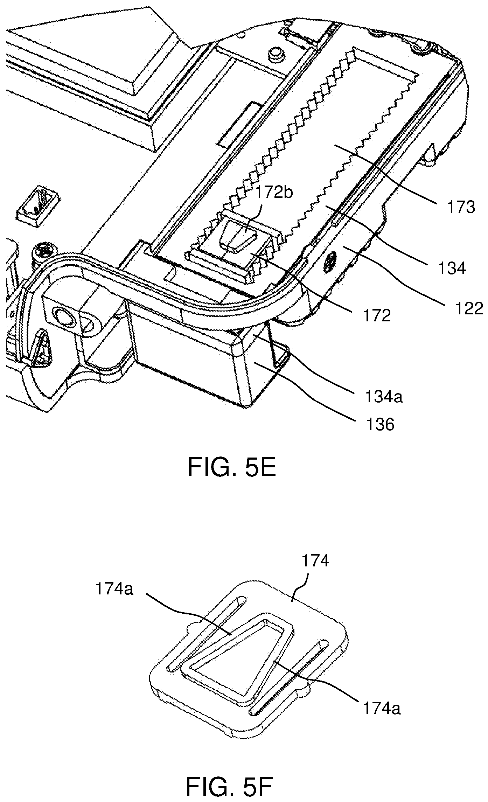

FIG. 5A shows a back of the support-panel potion 122 of the controller body 110 with an extension-locking mechanism 170 in a locking position according to various embodiments. FIG. 5B shows a cross-section of the back of the support-panel potion 122 of the controller body 110 of FIG. 5A according to various embodiments. FIG. 5C shows the back of the support-panel potion 122 of the controller body 110 of FIG. 5A with the extension-locking mechanism 170 in a retracted position according to various embodiments. FIG. 5D shows a cross-section of the back of the support-panel potion 122 of the controller body 110 of FIG. 5C according to various embodiments. FIG. 5E shows a cut away view from an underside of the support-panel potion 122 of the controller body 110 to reveal an extension-locking member 172 of the extension-locking mechanism 170 and the extension unit 132 according to various embodiments. FIG. 5F shows a pusher member 172 of the extension-locking mechanism 170 according to various embodiments.

According to various embodiments, the controller body 102, 104 may include the extension-locking mechanism 170. According to various embodiments, the extension-locking mechanism 170 may be disposed at the support-panel potion 122 of the controller body 110. According to various embodiments, the extension-locking mechanism 170 may be operable to lock the extension unit 132 from sliding relative to the support-panel portion 122 and to unlock the extension unit 132 such that the extension unit 132 may be free to slide relative to the support-panel portion 122. According to various embodiments, the extension-locking mechanism 170 may be disposed in a manner so as to be capable of engaging with the extension unit 132 for locking or unlocking the extension unit 132. Accordingly, the extension-locking mechanism 170 may be disposed adjacent the extension unit 132 near the side of the support-panel portion 122 from which the outer end 134a of the extension arm 134 of the extension unit 132 and the support member 136 is exposed.

According to various embodiments, the extension-locking mechanism 170 may include the extension-locking member 172. According to various embodiments, the extension-locking member 172 may be movable between the locking position to engage with the extension unit 132 for locking and the retracted position to disengage from the extension unit 132 for unlocking. Accordingly, when the extension-locking member 172 is in the locking position, the extension-locking member 172 may be in engagement with the extension unit 132 so as to prohibit or prevent the extension unit 132 for sliding relative to the support-panel portion 122 along the sliding axis 131. Further, when the extension-locking member 172 is in the retracted position, the extension-locking member 172 may be disengaged from the extension unit 132 such that the extension unit 132 may be free for sliding relative to the support-panel portion 122 along the sliding axis 131. Hence, the extension-locking member 172 may be operated to move into the locking position to lock the extension unit 132 in place after a desired amount of extension of the extension unit 132 has been achieved to attach the controller 102, 104 to the portable electronic device. Further, the extension-locking member 172 may be operated to move into the retracted position to unlock the extension unit 132 such that the extension unit 132 may be slidable along the sliding axis to adjust the amount of extension for attaching the controller 102, 104 to the portable electronic device.

According to various embodiments, the extension-locking member 172 of the extension-locking mechanism 170 may be spring-loaded. According to various embodiments, the extension-locking member 172 may be biased in the locking position. Accordingly, the extension-locking member 172 may be in the locking position in the original state. According to various embodiments, the extension-locking mechanism 170 may include the pusher member 174 (as shown in FIG. 5F or as shown in dotted-lines in FIG. 5B and FIG. 5D) operable to push the extension-locking member 172 into the retracted position so as to disengage from the extension unit 132 and to release the extension-locking member 172 such that a spring-loaded force may move the extension-locking member 172 into the locking position to engage with the extension unit 132. Accordingly, the pusher member 174 may push the extension-locking member 172 from the locking position (see FIG. 5B) to the retracted position (see FIG. 5D) such that the extension-locking member 172 may be depressed and move away from the extension unit 132. Subsequently, the pusher member 174 may be released from the extension-locking member 172 such that the spring-loaded force of the extension-locking member 172 may return the extension-locking member 172 from the retracted position (see FIG. 5D) to the locking position (see FIG. 5B) for the extension-locking member 172 to engage the extension unit 132.

According to various embodiments, the extension unit 132 may include a complimentary extension-locking arrangement 176. According to various embodiments, the extension-locking member 172 of the extension-locking mechanism 170 may engage with the complimentary extension-locking arrangement 176 of the extension unit 132 to lock the extension unit 132. According to various embodiments, the complimentary extension-locking arrangement 176 may extend longitudinally along the extension unit 132.

As shown in FIG. 5B, FIG. 5D and FIG. 5E as an example, according to various embodiments, the extension-locking member 172 may engage with the extension arm 134 of the extension unit 132 (e.g. the elongate structure 160) in the locking position for locking the extension unit 132 and disengage from the extension arm 134 of the extension unit 132 (e.g. the elongate structure 160) in the retracted position for unlocking the extension unit 132. As also shown in FIG. 5B, FIG. 5D and FIG. 5E as an example, the extension-locking mechanism 170 may include two spaced apart extension-locking members 172 with a compression spring 172a extending between the two spaced apart extension-locking members 172 such that the two spaced apart extension-locking members 172 may be spring-loaded. Accordingly, the extension arm 134 of the extension unit 132 (e.g. the elongate structure 160) may include a longitudinal slot 173 such that the two spaced apart extension-locking members 172 with the compression spring 172a may be disposed within the longitudinal slot 173 of the extension arm 134 of the extension unit 132 (e.g. the elongate structure 160). As also shown in FIG. 5E and FIG. 5F as an example, according to various embodiments, each of the two spaced apart extension-locking members 172 may include a protrusion 172b underneath. According to various embodiments, the pusher member 174 may also include a pair of converging ribs 174a. Accordingly, the pair of converging ribs 174a of the pusher member 174 may be in sliding engagement with the protrusions 172b of the two spaced apart extension-locking members 172 such that sliding the pusher member 174 relative to the two spaced apart extension-locking members 172 in a direction parallel to the sliding axis 131 may slide the pair of converging ribs 174a against the protrusions 172b to cause the two spaced apart extension-locking members 172 to move towards each other when the narrowest portions of the pair of converging ribs 174a are abutting the protrusions 172b (i.e. to engage the protrusions 172b) and to cause the two spaced apart extension-locking members 172 to move away from each other by the spring-loaded force when the widest portions of the pair of converging ribs 174a are abutting with the protrusions 172b (i.e. to release the protrusions 172b). As also shown in FIG. 5B, FIG. 5D and FIG. 5E as an example, according to various embodiments, the complimentary extension-locking arrangement 176 may be along the extension arm 134 of the extension unit 132 (e.g. the elongated structure 160). According to various embodiments, the complementary extension-locking arrangement 176 may be along the longitudinal slot 173 of the extension arm 134 of the extension unit 132. According to various embodiments, the complementary extension-locking arrangement 176 may be serrations or saw-tooth structures extending longitudinally along the extension arm 134 of the extension unit 132 (e.g. the elongated structure 160).

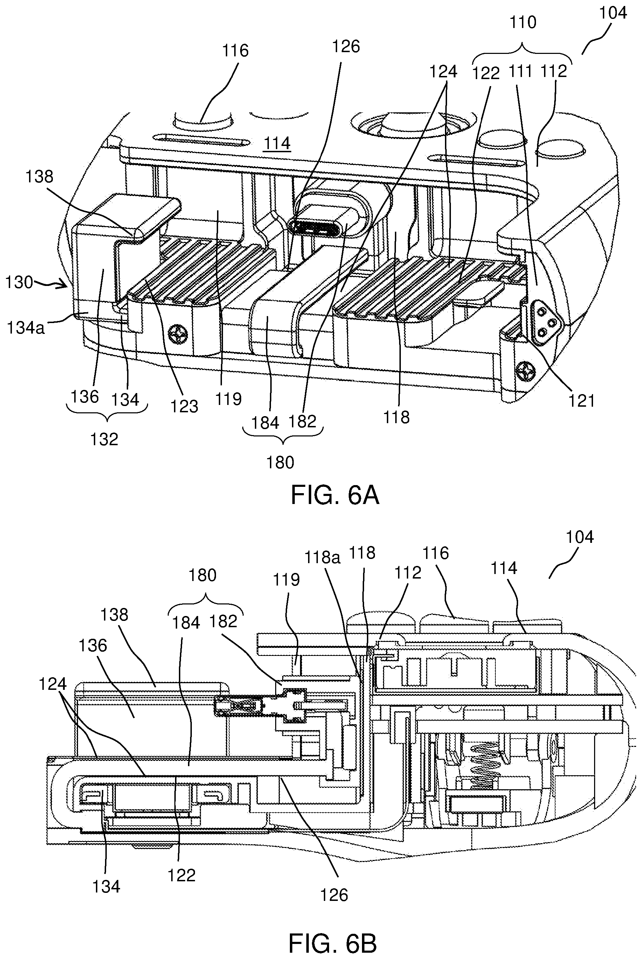

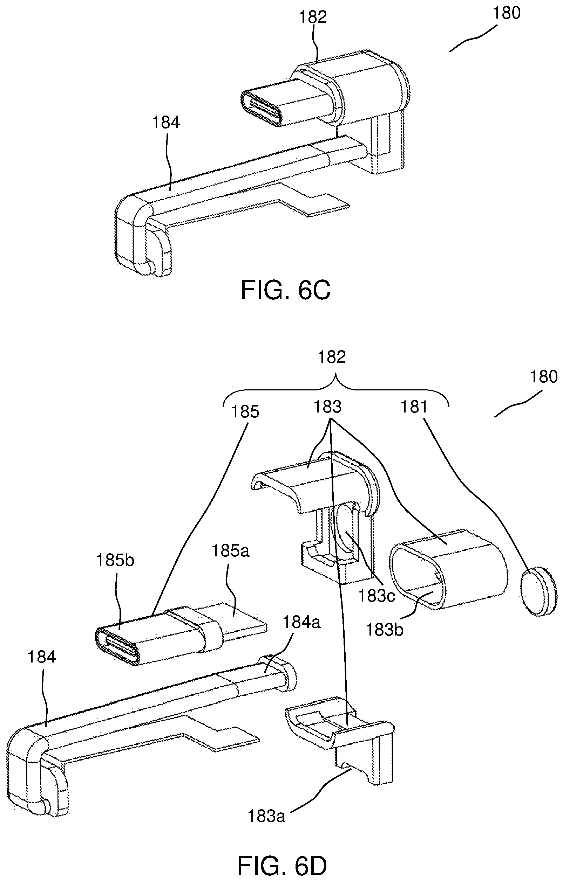

FIG. 6A shows the second controller 104 with a connector assembly 180 according to various embodiments. FIG. 6B shows a cross-sectional view of FIG. 6A according to various embodiments. FIG. 6C shows the connector assembly 180 of the second controller 104 of FIG. 6A according to various embodiments. FIG. 6D shows an exploded view of the connector assembly 180 of the second controller 104 of FIG. 6A according to various embodiments. While only the second controller 104 is illustrated in FIG. 6A to FIG. 6D, it is understood that the first controller 102 may contain the same or similar connector assembly 180 as shown. According to various embodiments, either one or both of the pair of controllers 102, 104 may include the connector assembly 180. For example, the second controller 104 of the pair of controllers 102, 104 may include the connector assembly 180, or the first controller 102 of the pair of controllers 102, 104 may include the connector assembly 180, or both the first controller 102 and the second controller 104 may include the connector assembly 180.

According to various embodiments, the controller 102, 104 may include the connector assembly 180. According to various embodiments, the connector assembly 180 may be extending from the support-panel portion 122 of the controller body 110. According to various embodiments, the connector assembly 180 may include a connector head 182 and a flexible cable 184 extending from the support-panel portion 122 of the controller body 110 to the connector head 182. Accordingly, the flexible cable 184 may be extending between the connector head 182 and the support-panel portion 122. Hence, the flexible cable 184 may interconnect the connector head 182 and the support-panel portion 122. According to various embodiments, the connector head 182 may be configured to be removably attachable to a recessed side-wall section 118 (or side-wall section) of the main body portion 112 of the controller body 110. According to various embodiments, the recessed side-wall section 118 (or side-wall section) of the main body portion 112 may be perpendicular to the backing-surface 124 of the support-panel portion 122. According to various embodiments, the recessed side-wall section 118 of the main body portion 112 may be recessed into a side-wall 119 of the main body portion 112 extending perpendicularly from the backing-surface 124 of the support-panel portion 122. According to various embodiments, the side-wall 119 of the main body portion 112 may be along the edge segment 126 of the backing-surface 124 of the support-panel portion 122. Hence, the recessed side-wall section 118 of the main body portion 112 may be recessed into the side-wall 119 of the main body portion 112 from the edge segment 126 of the backing-surface 124 of the support-panel portion 122. According to various embodiments, while it is described and shown in the figures that the connector head 182 may be removably attachable to the recessed side-wall section 118 of the main body portion 112, it is understood that the connector head 182 may also be removably attachable to a side-wall section that is flushed with the side-wall 119 of the main body portion 112 along the edge segment 126 of the backing-surface 124 of the support-panel portion 122 without departing from the intended function or meaning.

According to various embodiments, in the controller 102, 104, a thickness of the support-panel portion 122 may be smaller than a thickness of the main body portion 112. Accordingly, the support-panel portion 122 may be thinner than the main body portion 112. According to various embodiments, the backing-surface 124 of the support-panel portion 122, which is facing the same direction as the control-surface 114 of the main body portion 112, may be recessed from the control-surface 114 of the main body portion 112. Accordingly, the backing-surface 124 of the support-panel portion 122 and the control-surface 114 of the main body portion 112 may form a stepped-down profile or arrangement. According to various embodiments, the side-wall 119 of the main body portion 112 may be along the boundary between the main body portion 112 and the support-panel portion 122 forming the stepped-down profile or arrangement from the control-surface 114 of the main body portion 112 to the backing-surface 124 of the support-panel portion 122. Accordingly, the recessed side-wall section 118 (or side-wall section) of the main body portion 112 may be along the boundary between the main body portion 112 and the support-panel portion 122. According to various embodiments, the side-wall 119 of the main body portion 112 may be along the edge segment 126 demarcating the boundary between the main body portion 112 and the support-panel portion 122 such that the recessed side-wall section 118 of the main body portion 112 may be recessed into the side-wall 119 of the main body portion 112 from the boundary between the main body portion 112 and the support-panel portion 122.

According to various embodiments, the recessed side-wall section 118 (or side-wall section) of the main body portion 112 may include an engagement element 118a. According to various embodiments, the engagement element 118a of the recessed side-wall section 118 (or side-wall section) may be configured to engage with the connector head 182 of the connector assembly 180 such that the connector head 182 of the connector assembly 180 may be removably attachable to the recessed side-wall section 118 (or side-wall section) of the main body portion 112.

According to various embodiments, the connector head 182 may include a housing 183. Accordingly, the housing 183 may give shape and structure to the connector head 182. According to various embodiments, the connector head 182 may include one or more electrical contact elements 185 exposed from the housing 183. Accordingly, the one or more electrical contact elements 185 may be exposed so as to be accessible for connecting to the portable electronic device for establishing electrical connections. According to various embodiments, the one or more electrical contact elements 185 may be in the form of, including but not limited to, a Universal Serial Bus (USB) Type-C connector, or a lightning connector, or micro USB connector, or mini USB connector. According to various embodiments, the one or more electrical contact elements 185 may be permanently fixed to the housing 183 of the connector head 182, or may be removably attachable to the housing 183 of the connector head 182 such that the one or more electrical contact elements 185 may be swappable or interchangeable between the different types of electrical contact elements. According to various embodiments, the connector head 182 may include the corresponding engagement element 181 disposed at the housing 183 and opposite from the one or more electrical contact elements 185 of the connector head 182. Accordingly, the one or more electrical contact elements 185 and the corresponding engagement element 181 may be on opposite sides of the housing 183. Hence, the connector head 182 may be removably attachable to the recessed side-wall section 118 (or side-wall section) of the main body portion 112 by engaging the corresponding engagement element 181 of the connector head 182 with the engagement element 118a of the recessed side-wall section 118 (or side-wall section) of the main body portion 112 such that the one or more electrical contact elements 185 of the connector head 182 may be directed perpendicularly away from the recessed side-wall section 118 (or side-wall section) of the main body portion 112. Thus, the side of the housing 183 of the connector head 182 with the corresponding engagement element 181 may be abutting the recessed side-wall section 118 (or side-wall section) of the main body portion 112 and the opposite side of the housing 183 of the connector head 182 with the exposed one or more electrical contact elements 185 may be directed or facing away from the recessed side-wall section 118 (or side-wall section) of the main body portion 112.

According to various embodiments, with the connector head 182 of the connector assembly 180 being removably attachable to the recessed side-wall section 118 (or side-wall section) of the main body portion 112, the connector head 182 may be removed from the recessed side-wall section 118 (or side-wall section) for connecting to the portable electronic device before fitting the portable electronic device to the controller 102, 104. This may facilitate easier connection between the portable electronic device and the controller 102, 104. Further, the controller 102, 104 may be suitable to be used with different sizes of the portable electronic device because the position of the connector head 182 is not fixed with respect to the controller 102, 104 and, thus, would not restrict different sizes of the portable electronic device with different positioning of a corresponding connector to be used with the controller 102, 104.

According to various embodiments, the engagement element 118a of the recessed side-wall section 118 (or side-wall section) of the main body portion 112 and the corresponding engagement element 181 of the connector head 182 may be configured for magnetic engagement, or suction engagement, or adhesive engagement, or pins and foam/cork board engagement. As illustrated as an example in FIG. 6B and FIG. 6D, according to various embodiments, when the engagement element 118a of the recessed side-wall section 118 (or side-wall section) and the corresponding engagement element 181 of the connector head 182 are configured for magnetic engagement, the engagement element 118a of the recessed side-wall section 118 (or side-wall section) may include a metallic plate and the corresponding engagement element 181 of the connector head 182 may include a magnet, or the engagement element 118a of the recessed side-wall section 118 (or side-wall section) may include a magnet plate and the corresponding engagement element 181 of the connector head 182 may include a metallic element. According to various embodiments, when the engagement element 118a of the recessed side-wall section 118 (or side-wall section) and the corresponding engagement element 181 of the connector head 182 are configured for suction engagement, the engagement element 118a of the recessed side-wall section 118 (or side-wall section) may include a flat panel and the corresponding engagement element 181 of the connector head 182 may include a suction cup. According to various embodiments, when the engagement element 118a of the recessed side-wall section 118 (or side-wall section) and the corresponding engagement element 181 of the connector head 182 are configured for adhesive engagement, the engagement element 118a of the recessed side-wall section 118 (or side-wall section) may include a flat panel with an adhesive surface and the corresponding engagement element 181 of the connector head 182 may include a corresponding adhesive surface. According to various embodiments, when the engagement element 118a of the recessed side-wall section 118 (or side-wall section) and the corresponding engagement element 181 of the connector head 182 are configured for pins and foam/cork board engagement, the engagement element 118a of the recessed side-wall section 118 (or side-wall section) may include a foam/cork board and the corresponding engagement element 181 of the connector head 182 may include pins.

According to various embodiments, the housing 183 of the connector head 182 may include a cable-in opening 183a for an end portion 184a of the flexible cable 184 to be housed within the housing 183 and one or more contact-element openings 183b for the one or more electrical contact elements 185 to be exposed from the housing 183. Accordingly, the end portion 184a of the flexible cable 184 may be inserted into the housing 183 via the cable-in opening 183a. According to various embodiments, the end portion 184a of the flexible cable 184 may be connected to the one or more electrical contact elements 185 within the housing 183. For example, the end portion 184a of the flexible cable 184 may be connected to a rear portion 185a of the one or more electrical contact elements 185 while a front portion 185b of the one or more electrical contact elements 185 may be exposed from the housing 183 via the one or more contact-element openings 183b of the housing 183.

According to various embodiments, the cable-in opening 183a and the one or more contact-element openings 183b being on a first side of the housing 183. According to various embodiments, the corresponding engagement element 181 of the connector head 182 may be disposed at a second side of the housing 183. The second side of the housing 183 may be opposite the first side of the housing 183. According to various embodiments, the corresponding engagement element 181 of the connector head 182 may be housed within the housing 183 at the second side of the housing 183, or may be on an exterior of the second side of the housing 183.

According to various embodiments, the housing 183 of the connector head 182 may include an engagement element opening 183c at the second side of the housing 183 to expose the corresponding engagement element 181 for engaging with the engagement element 118a of the recessed side-wall section 118 (or side-wall section) of the main body portion 112. Accordingly, the corresponding engagement element 181 of the connector head 182 may be housed within the housing 183 and may be exposed from the second side of the housing 183 through the engagement element opening 183c for engaging with the engagement element 118a of the recessed side-wall section 118 (or side-wall section) of the main body portion 112. Hence, the corresponding engagement element 181 of the connector head 182 may be exposed through the engagement element opening 183c for direct engagement with the engagement element 118a of the recessed side-wall section 118 (or side-wall section) of the main body portion 112. Thus, when the engagement element 118a of the recessed side-wall section 118 (or side-wall section) and the corresponding engagement element 181 of the connector head 182 are configured for magnetic engagement, the corresponding engagement element 181 of the connector head 182 may be exposed through the engagement element opening 183c for direct magnetic engagement with the engagement element 118a of the recessed side-wall section 118 (or side-wall section) of the main body portion 112 the corresponding engagement element 181 of the connector head 182.

According to various embodiments, in the controller 102, 104, the edge segment 126 of the backing-surface 124 of the support-panel portion 122 demarcating the boundary between the main body portion 112 and the support-panel portion 122 may be a straight edge segment. According to various embodiments, the extension unit 132 may be oriented with respect to the support-panel portion 122 such that the sliding axis 131 of the extension unit 132 may be parallel to the edge segment 126 (i.e. the straight edge segment). Accordingly, the extension unit 132 may be retractably extendable with respect to the support-panel portion 122 in a direction parallel to the edge segment 126 (i.e. the straight edge segment). Hence, the stopper member 136 of the extension unit 132 may be movable linearly by retractably extending the extension arm 134 of the extension unit 132 with respect to support-panel portion 122 in a manner parallel to the edge segment 126 (i.e. the straight edge segment).

According to various embodiments, the controller body 110 of the controller 102, 104 may include a stopper portion 111 extending upright from the backing-surface 124 of the support-panel portion 122 along a first transverse edge segment 121 of the backing-surface 124. The first transverse edge segment 121 may be perpendicular to the edge segment 126 (i.e. the straight edge segment) of the backing-surface 124. Accordingly, the stopper portion 111 extending perpendicularly from the backing-surface 124 of the support-panel portion 122. According to various embodiments, the first transverse edge segment 121 of the backing-surface 124 of the support-panel portion 122 may be within the region of the support-panel portion 122 to which the second end 152b of the at least one tension spring 152 may be attached. Accordingly, the first transverse edge segment 121 of the backing-surface 124 may be at the region of the support-panel portion 122 opposite the side of the support-panel portion 122 from which extension unit 132 may be extended from the support-panel portion 122.

According to various embodiments, the stopper member 136 of the extension unit 132 may be opposing the stopper portion 111. Accordingly, the stopper member 136 of the extension unit 132, which is exposed from the support-panel portion 122 at the side of the support-panel portion 122 opposite the stopper portion 111, may be extending perpendicularly from the outer end 134a of the extension arm 134 of the extension unit 132 in a manner so as to be opposing the stopper portion 111 such that respective inner faces of the stopper member 136 and the stopper portion 111 may be facing each other. According to various embodiments, the stopper member 136 of the extension unit 132 together with the extension arm of the extension unit 132 may be slidable along the sliding axis 131 away from or towards a second transverse edge segment 123 of the backing-surface 124 of the support-panel portion 122. The second transverse edge segment 123 may be opposite the first transverse edge segment 121. The sliding axis 131 may be perpendicular to the second transverse edge segment 123, as well as the first transverse edge segment 121. Accordingly, the extension unit 132 may be retractably extendable along the sliding axis 131 from the second transverse edge segment 123 of the backing-surface 124 in a manner perpendicular to the second transverse edge segment 123 to slide the stopper member 136 of the extension unit 132 perpendicularly away from or towards the second transverse edge segment 123 of the backing-surface 124 of the support-panel portion 122.

According to various embodiments, the stopper portion 111 of the controller body 110 and the stopper member 136 of the extension unit 132 may be operable to cooperatively engage two opposite sides of the portable electronic device for removably attaching the controller 102, 104 to the portable electronic device. Accordingly, the stopper portion 111 of the controller body 110 and the stopper member 136 of the extension unit 132 may clamp the two opposite sides of the portable electronic device to attach the controller 102, 104 to the portable electronic device. According to various embodiments, the extension unit 132 may be retractably extendable with respect to the support-panel portion 122 so as to vary a direct distance between the stopper portion 111 of the controller body 110 and the stopper member 136 of the extension unit 132 so as to fit the controller 102, 104 to different portable electronic devices with different sizes. Accordingly, the arrangement of the stopper portion 111 of the controller body 110 and the stopper member 136 of the extension unit 132 may enable to the controller 102, 104 to be useable for different portable electronic devices with different sizes.

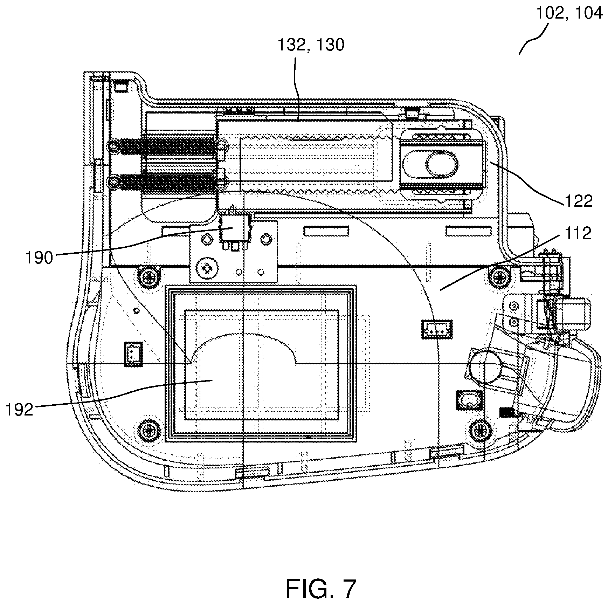

FIG. 7 shows a cross-sectional view of a back of the controller 102, 104 according to various embodiments. According to various embodiments, the controller 102, 104 may include a switch 190 for a Bluetooth connection at the support-panel portion 122 of the controller body 110 of the controller 102, 104. According to various embodiments, the switch 190 for the Bluetooth connection may be configured to be operable by the extension unit 132 (i.e. the attachment mechanism 130). Accordingly, the switch 190 for the Bluetooth connection may be disposed adjacent to the extension unit 132 (i.e. the attachment mechanism 130) and may be associated with the extension unit 132 (i.e. the attachment mechanism 130). According to various embodiments, the switch 190 may turn on the Bluetooth connection when the extension unit 132 (i.e. the attachment mechanism 130) is extended from the support-panel portion 122, and may turn off the Bluetooth connection when the extension unit 132 (i.e. the attachment mechanism 130) is retracted into the support-panel portion 122. According to various embodiments, the the switch 190 for the Bluetooth connection may be associated with the extension unit 132 (i.e. the attachment mechanism 130) via direct contact for controlling the turning on or off of the switch 190, or via non-contact sensing such as, including but not limited to, magnetic, transponder, induction, proximity, optical, or ultrasonic, for controlling the turning on or off of the switch 190.

According to various embodiments, the Bluetooth connection may be for pairing of the pair of controllers 102, 104. Accordingly, when the extension unit 132 (i.e. the attachment mechanism 130) is extended to attach the controller 102, 104 to the portable electronic device, the switch 190 for the Bluetooth connection may be turned on for automatic pairing between the pair of controllers 102, 104 attached to the portable electronic device. According to various embodiments, either one or both of the pair of controllers 102, 104 may include the switch 190 for the Bluetooth connection. Accordingly, either the first controller 102 may have the switch 190, or the second controller 104 may have the switch 190, or each of both the first and second controllers 102, 104 may have the switch 190. According to various embodiments, the controller 102, 104 with the connector assembly 180 may have the switch 190. Accordingly, the controller 102, 104 having the connector assembly 180 may additionally have the switch 190. For example, according to various embodiments, the first controller 102 may not have the connector assembly 180 and may not have the switch 190, but the second controller 104 may have both the connector assembly 180 and the switch 190, or vice versa.

According to various embodiments, the controller 102, 104 may include a processor 192 configured to automatically connect the first controller 102 and the second controller 104 via the Bluetooth connection upon the switch 190 being turned on by the movement of the extension unit 132 (i.e. the attachment mechanism 130) relative to the switch 190. Accordingly, the processor may automatically pair the first controller 102 and the second controller 104 via the Bluetooth connection when the switch 190 is turned on by the extension unit 132 (i.e. the attachment mechanism 130) as the extension unit 132 (i.e. the attachment mechanism 130) is operated and moved to attach the controllers 102, 104 to the portable electronic device.

Referring back to FIG. 1A and FIG. 1B, according to various embodiments, a controller set 100 may include the pair of controllers 102, 104. According to various embodiments, the pair of controllers 102, 104 may be attachable to each other in a manner so as to be in a complementary arrangement with the support-panel portions 122 of the pair of controllers 102, 104 respectively overlapping each other and the main body portions 112 of the pair of controllers 102, 104 on two opposite sides. Accordingly, the pair of controllers 102, 104 may be coupled to each other by overlapping the support-panel portions 122 of the pair of controllers 102, 104 so as to form a compact assembly for storage.

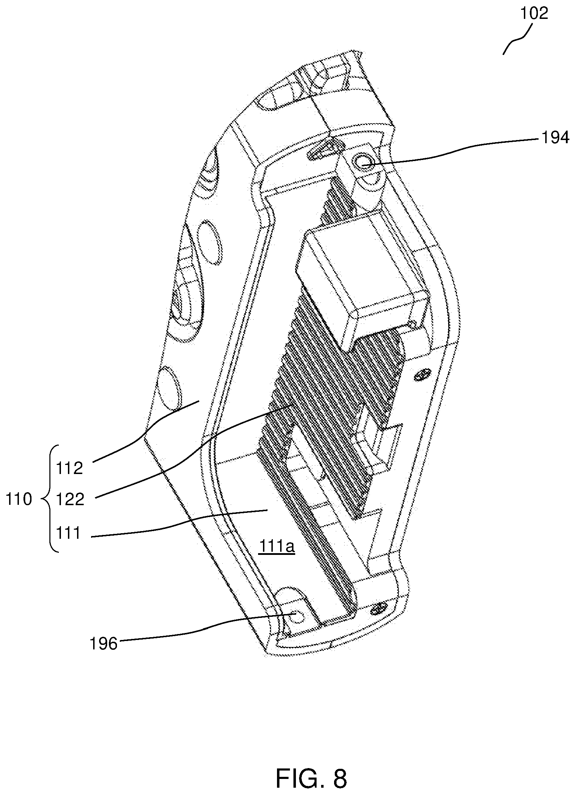

FIG. 8 shows another view of the first controller 102 with a first interlocking element 194 and a second interlocking element 196 according to various embodiments. While only the first controller 102 is illustrated in FIG. 8, it is understood that the second controller 104 may contain the same or similar first and second interlocking elements 194, 196 as shown.

According to various embodiments, the support-panel portions 122 of the controller body 110 and support portion 111 of the controller body 110 of the controller 102, 104 may form the overlap interface 102a, 104a for meshing or interconnecting or coupling the pair of controllers 102, 104 together. According to various embodiments, the controller 102, 104 may include the first interlocking element 194 and the second interlocking element 196 along the overlap interface 102a, 104a. The first interlocking element 194 may be complementary with the second interlocking element 196. According to various embodiments, when the pair of controllers 102, 104 are coupled together in the complementary arrangement, the pair of controllers 102, 104 may be interlocked to each other via the engagement between the first and second interlocking elements 194, 196 of the first controller 102 and the first and second interlocking elements 194, 196 of the second controller 104.

According to various embodiments, when the pair of controllers 102, 104 are attached in the complementary arrangement, the first interlocking element 194 of the first controller 102 of the pair of controllers 102, 104 may engage the second interlocking element 196 of the second controller 104 of the pair of controllers 102, 104, and the second interlocking element 196 of the first controller 102 of the pair of controllers 102, 104 may engage the first interlocking element 194 of the second controller 104 of the pair of the controllers 102, 104 so as to interlock the pair of controllers 102, 104. Accordingly, the first interlocking element 194 and the second interlocking element 196 may be disposed and located at different positions of the overlap interface 102a, 104a such that, when the pair of controllers 102, 104 are attached in the complementary arrangement with the support-panel portions 122 of the pair of controllers 102, 104 respectively overlapping each other, the first interlocking element 194 of the first controller 102 may engage the second interlocking element 196 of the second controller 104 and the second interlocking element 196 of the first controller 102 may engage the first interlocking element 194 of the second controller 104. As shown in FIG. 8 as an example, according to various embodiments, the first interlocking element 194 may be disposed at the side of the support-panel portions 122 from which the extension unit 132 may be extended and the second interlocking element 196 may be disposed at the inner face 111a of the support portion 111 such that the first interlocking element 194 at the side of the support-panel portions 122 of the first controller 102 may engage with the second interlocking element 196 at the inner face 111a of the support portion 111 of the second controller 104 and the second interlocking element 196 at the inner face 111a of the support portion 111 of the first controller 102 may engage with the first interlocking element 194 at the side of the support-panel portions 122 of the second controller 104 when the first controller 102 and the second controller 104 are coupled together in the complementary arrangement. As an example, according to various embodiments, the first interlocking element 194 may be a ball lock and the second interlocking element 196 may be a corresponding socket, or vice versa, so as to form a ball lock mechanism.

Various embodiments have provided a more effective and versatile controller for a portable electronic device which may be use with different portable electronic devices of different sizes and dimensions. Various embodiments have an effective and durable attachment mechanism (e.g. extension unit) for attaching the controller to different portable electronic devices of different sizes and dimensions. Various embodiments have provided an effective, versatile and simple to use connection assembly for connecting the controller to different portable electronic devices of different sizes and dimensions while allowing the controller to be fitted or attached to the portable electronic device. Various embodiments have also provided a controller set having a pair of controllers that can be coupled together in a compact manner for storage. Various embodiments have also provided automatic pairing of the pair of controllers upon attaching the pair of controllers to the portable electronic device.

While the invention has been particularly shown and described with reference to specific embodiments, it should be understood by those skilled in the art that various changes, modification, variation in form and detail may be made therein without departing from the scope of the invention as defined by the appended claims. The scope of the invention is thus indicated by the appended claims.

## Claims

1. A controller (102, 104) for a portable electronic device, the controller comprising:
a controller body (110) comprising
a main body portion (112) having a control-surface (114) with one or more input-elements (116), and
a support-panel portion (122) extending sideway from the main body portion, the support-panel portion having a backing-surface (124) directed in a same direction as the control-surface of the main body portion, wherein the backing-surface has an edge segment (126) demarcating a boundary between the main body portion and the support-panel portion; and
an extension unit (132) slidably coupled to the support-panel portion of the controller body in a manner so as to be slidable with respect to the support-panel portion along a sliding axis (131) parallel to the backing-surface of the support-panel portion, wherein the extension unit comprises
an extension arm (134), and
a stopper member (136) at an outer end (134a) of the extension arm exposed outside the support-panel portion,
wherein the extension arm is retractably extendable from the support-panel portion in a manner so as to slide the stopper member along the sliding axis away from or towards the support-panel portion,
wherein the stopper member of the extension unit is retractably extendable from the outer end of the extension arm along an extension axis (135) extending perpendicularly away from the extension arm, the extension axis being perpendicular to the backing surface of the support-panel portion,
wherein the stopper member comprises an overhang portion (138) extending over a region of the extension arm in a direction from the outer end of the extension arm towards an inner end (134b) of the extension arm, wherein the stopper member of the extension unit is operable to clamp the portable electronic device along a thickness direction of the portable electronic device for removably attaching the controller to the portable electronic device.

2. The controller as claimed in claim 1, wherein the extension unit comprises a stopper-member-biasing mechanism coupled between the stopper member and the outer end of the extension arm to exert a biasing force against extending the stopper member along the extension axis perpendicularly away from the extension arm.

3. The controller as claimed in claim 2, wherein the stopper-member-biasing mechanism comprises
a slider bracket fixedly attached to the stopper member so as to be located at a base of the stopper member, the slider bracket having a sliding element,
at least one elongated slider-guide member extending perpendicularly away from the outer end of the extension arm in a direction parallel to the extension axis of the stopper member, wherein the stopper member is placed over the at least one elongated slider-guide member with the sliding element of the slider bracket in sliding engagement with the at least one elongated slider-guide member,
at least one spring retainer at a tip of the at least one elongated slider-guide member, and
at least one compression spring fitted alongside the at least one elongated slider-guide member between the slider bracket and the at least one spring retainer in a manner such that a first end of the at least one compression spring abuts the slider bracket and a second end of the at least one compression spring is retained by the at least one spring retainer,
wherein the at least one compression spring is compressed to exert a biasing force to push apart the slider bracket and the at least one spring retainer when the stopper member is extended perpendicularly away from the extension arm along the extension axis.

4. The controller as claimed in claim 3, wherein the stopper-member-biasing mechanism comprises
at least one elongated spring-guide member arranged parallel to the at least one elongated slider-guide member with a first end of the at least one elongated spring-guide member coupled to the at least one spring retainer at the tip of the at least one elongated slider-guide member,
wherein the at least one elongated spring-guide member is inserted through the at least one compression spring,
wherein the slider bracket comprises at least one spring-guide-member hole through which a second end of the at least one elongated spring-guide member is inserted such that the slider bracket is slidable along the at least one elongated spring-guide member.

5. The controller as claimed in any one of claims 1 to 4, further comprising an extension-arm-biasing mechanism coupled between the support-panel portion of the controller body and the extension unit to exert a biasing force against extending the extension unit along the sliding axis away from the support-panel portion.

6. The controller as claimed in claim 5,
wherein the extension arm of the extension unit comprises an elongated structure slidably inserted into the support-panel portion of the controller body so as to extend longitudinally inwards along the sliding axis within the support-panel portion,
wherein the extension-arm-biasing mechanism comprises at least one tension spring oriented parallel to the sliding axis with a first end of the at least one tension spring attached to the inner end of the extension arm of the extension unit and a second end of the at least one tension spring attached to the support-panel portion,
wherein the extension arm of the extension unit comprises at least one integral L-shaped plate,
wherein a longer section of the L-shaped plate is embedded in the elongated structure of the extension arm with a free end of the longer section of the L-shaped plate coupled to the first end of the at least one tension spring,
wherein a shorter foot section of the L-shaped plate is extending perpendicularly away from the extension arm to form the elongated slider-guide member with the at least one spring retainer at a free-end of the shorter foot section of the L-shaped plate to hold the second end of the at least one compression spring.

7. The controller as claimed in any one of claims 1 to 6, further comprising an extension-locking mechanism operable to lock the extension unit from sliding relative to the support-panel portion and to unlock the extension unit such that the extension unit is free to slide relative to the support-panel portion.

8. The controller as claimed in claim 7,
wherein the extension-locking mechanism comprises an extension-locking member movable between a locking position to engage with the extension unit for locking and a retracted position to disengage from the extension unit for unlocking.

9. The controller as claimed in claim 8,
wherein the extension-locking member is spring-loaded,
wherein the extension-locking mechanism comprises a pusher member operable to push the extension-locking member into the retracted position so as to disengage from the extension unit and to release the extension-locking member such that a spring-loaded force moves the extension-locking member into the locking position to engage with the extension unit,
wherein the extension arm of the extension unit comprises a complimentary extension-locking arrangement.

10. The controller as claimed in any one of claims 1 to 9, further comprising a connector assembly extending from the support-panel portion of the controller body, the connector assembly comprising
a connector head, and
a flexible cable extending from the support-panel portion of the controller body to the connector head,
wherein the connector head is configured to be removably attachable to a side-wall section of the main body portion of the controller body, the side-wall section being perpendicular to the backing-surface of the support-panel portion along the boundary between the main body portion and the support-panel portion.

11. The controller as claimed in claim 10,
wherein the side-wall section of the main body portion of the controller body comprises an engagement element,
wherein the connector head comprises
a housing,
one or more electrical contact elements exposed from the housing, and
a corresponding engagement element disposed at the housing and opposite from the one or more electrical contact elements of the connector head in a manner such that the connector head is removably attachable to the side-wall section of the main body portion, by engaging the corresponding engagement element of the connector head with the engagement element of the side-wall section of the main body portion, with the one or more electrical contact elements of the connector head directed perpendicularly away from the side-wall section of the main body portion.

12. The controller as claimed in claim 11,
wherein the engagement element of the side-wall section of the main body portion comprises a metallic plate and the corresponding engagement element of the connector head comprises a magnet, or
wherein the engagement element of the side-wall section of the main body portion comprises a magnet and the corresponding engagement element of the connector head comprises a metallic element.

13. The controller as claimed in claim 11,
wherein the housing of the connector head comprises a cable-in opening for an end portion of the flexible cable to be housed within the housing and one or more contact-element openings for the one or more electrical contact elements to be exposed from the housing, the cable-in opening and the one or more contact-element openings being on a first side of the housing,
wherein the corresponding engagement element is disposed at a second side of the housing, the second side being opposite the first side of the housing,
wherein the housing of the connector head comprises an engagement element opening at the second side of the housing to expose the corresponding engagement element for engaging with the engagement element of the side-wall section of the main body portion.

14. The controller as claimed in any one of claims 1 to 13,
wherein the edge segment of the backing-surface demarcating the boundary between the main body portion and the support-panel portion is a straight edge segment,
wherein the sliding axis of the extension unit is parallel to the straight edge segment,
wherein the controller body comprises a stopper portion extending upright from the backing-surface of the support-panel portion along a first transverse edge segment of the backing-surface, the first transverse edge segment being perpendicular to the straight edge segment of the backing-surface,
wherein the stopper member of the extension unit is opposing the stopper portion in a manner so as to be slidable along the sliding axis away from or towards a second transverse edge segment of the backing-surface of the support-panel portion, the second transverse edge segment being opposite the first transverse edge segment,
wherein the stopper portion of the controller body and the stopper member of the extension unit are operable to cooperatively engage two opposite sides of the portable electronic device for removably attaching the controller to the portable electronic device.

15. The controller as claimed in any one of claims 1 to 14, further comprising a switch for a Bluetooth connection at the support-panel portion,
wherein the switch is operable by the extension unit to turn on the Bluetooth connection when the extension unit is extended from the support-panel portion and to turn off the Bluetooth connection when the extension unit is retracted into the support-panel portion.

## Patentansprüche

1. Steuereinrichtung (102, 104) für eine tragbare elektronische Vorrichtung, wobei die Steuereinrichtung aufweist:
einen Steuereinrichtungskörper (110), aufweisend:
einen Hauptkörperabschnitt (112), aufweisend eine Steuerfläche (114) mit einem oder mehreren Eingabeelementen (116), und
einen Stützplattenabschnitt (122), der sich seitwärts von dem Hauptkörperabschnitt erstreckt, wobei der Stützplattenabschnitt eine Rückfläche (124) aufweist, die in einer gleichen Richtung wie die Steuerfläche des Hauptkörperabschnitts ausgerichtet ist, wobei die Rückfläche ein Randsegment (126) aufweist, das eine Grenze zwischen dem Hauptkörperabschnitt und dem Stützplattenabschnitt begrenzt, und
eine Verlängerungseinheit (132), die mit dem Stützplattenabschnitt des Steuereinrichtungskörpers in einer Weise verschiebbar gekoppelt ist, um in Bezug auf den Stützplattenabschnitt entlang einer Verschiebeachse (131) parallel zur Rückfläche des Stützplattenabschnitts verschiebbar zu sein, wobei die Verlängerungseinheit aufweist:
einen Verlängerungsarm (134) und
ein Anschlagelement (136) an einem äußeren Ende (134a) des Verlängerungsarms, das außerhalb des Stützplattenabschnitts freiliegt,
wobei der Verlängerungsarm aus dem Stützplattenabschnitt in einer Weise einziehbar verlängerbar ist, um das Anschlagelement entlang der Verschiebeachse vom Stützplattenabschnitt weg oder zu diesem hin zu verschieben,
wobei das Anschlagelement der Verlängerungseinheit vom äußeren Ende des Verlängerungsarms entlang einer Verlängerungsachse (135), die sich senkrecht vom Verlängerungsarm weg erstreckt, einziehbar verlängerbar ist, wobei die Verlängerungsachse senkrecht zur Rückfläche des Stützplattenabschnitts ist,
wobei das Anschlagelement einen Überhangabschnitt (138) aufweist, der sich über einen Bereich des Verlängerungsarms in einer Richtung vom äußeren Ende des Verlängerungsarms weg in Richtung zu einem inneren Ende (134b) des Verlängerungsarms erstreckt,
wobei das Anschlagelement der Verlängerungseinheit betätigbar ist, um die tragbare elektronische Vorrichtung entlang einer Dickenrichtung der tragbaren elektronischen Vorrichtung festzuklemmen, um die Steuereinrichtung lösbar an der tragbaren elektronischen Vorrichtung anzubringen.

2. Steuereinrichtung gemäß Anspruch 1, wobei die Verlängerungseinheit einen Anschlagelement-Vorspannmechanismus aufweist, der zwischen dem Anschlagelement und dem äußeren Ende des Verlängerungsarms gekoppelt ist, um eine Vorspannkraft gegen eine Verlängerung des Anschlagelements entlang der Verlängerungsachse senkrecht weg vom Verlängerungsarm auszuüben.

3. Steuereinrichtung gemäß Anspruch 2, wobei der Anschlagelement-Vorspannmechanismus aufweist:
eine Schieberhalterung, die fest an dem Anschlagelement angebracht ist, um an einer Basis des Anschlagelements angeordnet zu sein, wobei die Schieberhalterung ein Schiebeelement aufweist,
mindestens ein langgestrecktes Schieberführungselement, das sich senkrecht vom äußeren Ende des Verlängerungsarms weg in einer Richtung parallel zur Verlängerungsachse des Anschlagelements erstreckt, wobei das Anschlagelement über dem mindestens einen langgestreckten Schieberführungselement angeordnet ist, wobei das Schiebeelement der Schieberhalterung in Schiebeeingriff mit dem mindestens einen langgestreckten Schieberführungselement ist,
mindestens einen Federhalter an einer Spitze des mindestens einen langgestreckten Schieberführungselements, und
mindestens eine Druckfeder, die längs des mindestens einen langgestreckten Schieberführungselements zwischen der Schieberhalterung und dem mindestens einen Federhalter auf eine Weise angebracht ist, dass ein erstes Ende der mindestens einen Druckfeder an der Schieberhalterung anliegt und ein zweites Ende der mindestens einen Druckfeder durch den mindestens einen Federhalter gehalten wird,
wobei die mindestens eine Druckfeder zusammengedrückt wird, um eine Vorspannkraft auszuüben, um die Schieberhalterung und den mindestens einen Federhalter auseinanderzuschieben, wenn das Anschlagelement senkrecht vom Verlängerungsarm weg entlang der Verlängerungsachse verlängert wird.

4. Steuereinrichtung gemäß Anspruch 3, wobei der Anschlagelement-Vorspannmechanismus aufweist:
mindestens ein langgestrecktes Federführungselement, das parallel zu dem mindestens einen langgestreckten Schieberführungselement angeordnet ist, wobei ein erstes Ende des mindestens einen langgestreckten Federführungselements mit dem mindestens einen Federhalter an der Spitze des mindestens einen langgestreckten Schieberführungselements gekoppelt ist,
wobei das mindestens eine langgestreckte Federführungselement durch die mindestens eine Druckfeder hindurch eingesetzt ist,
wobei die Schieberhalterung mindestens ein Federführungselementloch aufweist, durch das hindurch ein zweites Ende des mindestens einen langgestreckten Federführungselements eingesetzt ist, so dass die Schieberhalterung entlang des mindestens einen langgestreckten Federführungselements verschiebbar ist.

5. Steuereinrichtung gemäß irgendeinem der Ansprüche 1 bis 4, ferner aufweisend einen Verlängerungsarm-Vorspannmechanismus, der zwischen dem Stützplattenabschnitt des Steuereinrichtungskörpers und der Verlängerungseinheit gekoppelt ist, um eine Vorspannkraft gegen ein Verlängern der Verlängerungseinheit entlang der Verschiebeachse weg vom Stützplattenabschnitt auszuüben.

6. Steuereinrichtung gemäß Anspruch 5,
wobei der Verlängerungsarm der Verlängerungseinheit eine langgestreckte Struktur aufweist, die verschiebbar in den Stützplattenabschnitt des Steuereinrichtungskörpers eingesetzt ist, um sich in Längsrichtung entlang der Verschiebeachse innerhalb des Stützplattenabschnitts nach innen zu erstrecken,
wobei der Verlängerungsarm-Vorspannmechanismus mindestens eine parallel zur Verschiebeachse ausgerichtete Zugfeder aufweist, wobei ein erstes Ende der mindestens einen Zugfeder am inneren Ende des Verlängerungsarms der Verlängerungseinheit angebracht ist und ein zweites Ende der mindestens einen Zugfeder am Stützplattenabschnitt angebracht ist,
wobei der Verlängerungsarm der Verlängerungseinheit mindestens eine integrale L-förmige Platte aufweist,
wobei ein längerer Abschnitt der L-förmigen Platte in die langgestreckte Struktur des Verlängerungsarms eingebettet ist, wobei ein freies Ende des längeren Abschnitts der L-förmigen Platte mit dem ersten Ende der mindestens einen Zugfeder gekoppelt ist,
wobei ein kürzerer Fußabschnitt der L-förmigen Platte sich senkrecht vom Verlängerungsarm weg erstreckt, um das langgestreckte Schieberführungselement mit dem mindestens einen Federhalter an einem freien Ende des kürzeren Fußabschnitts der L-förmigen Platte zu bilden, um das zweite Ende der mindestens einen Druckfeder zu halten.

7. Steuereinrichtung gemäß irgendeinem der Ansprüche 1 bis 6, ferner aufweisend einen Verlängerungsverriegelungsmechanismus, der betätigbar ist, um die Verlängerungseinheit gegen ein Verschieben relativ zum Stützplattenabschnitt zu verriegeln und die Verlängerungseinheit zu entriegeln, so dass die Verlängerungseinheit relativ zu dem Stützplattenabschnitt frei gleiten kann.

8. Steuereinrichtung gemäß Anspruch 7,
wobei der Verlängerungsverriegelungsmechanismus ein Verlängerungsverriegelungselement aufweist, das zwischen einer Verriegelungsposition zum Eingriff mit der Verlängerungseinheit zum Verriegeln und einer Zurückziehposition zum Lösen von der Verlängerungseinheit zum Entsperren bewegbar ist.

9. Steuereinrichtung gemäß Anspruch 8,
wobei das Verlängerungsverriegelungselement federbelastet ist,
wobei der Verlängerungsverriegelungsmechanismus ein Druckelement aufweist, das betätigbar ist, um das Verlängerungsverriegelungselement in die Zurückziehposition zu drücken, um es von der Verlängerungseinheit zu lösen und das Verlängerungsverriegelungselement freizugeben, so dass eine Federkraft das Verlängerungsverriegelungselement in die Verriegelungsposition bewegt, um mit der Verlängerungseinheit in Eingriff zu gelangen,
wobei der Verlängerungsarm der Verlängerungseinheit eine komplementäre Verlängerungsverriegelungsanordnung aufweist.

10. Steuereinrichtung gemäß irgendeinem der Ansprüche 1 bis 9, ferner aufweisend eine Verbinderanordnung, die sich von dem Stützplattenabschnitt des Steuereinrichtungskörpers erstreckt, wobei die Verbinderanordnung aufweist:
einen Verbinderkopf und
ein flexibles Kabel, das sich von dem Stützplattenabschnitt des Steuereinrichtungskörpers zu dem Verbinderkopf erstreckt,
wobei der Verbinderkopf konfiguriert ist, um lösbar an einem Seitenwandabschnitt des Hauptkörperabschnitts des Steuereinrichtungskörpers anbringbar zu sein, wobei der Seitenwandabschnitt senkrecht zu der Rückfläche des Stützplattenabschnitts entlang der Grenze zwischen dem Hauptkörperabschnitt und dem Stützplattenabschnitt ist.

11. Steuereinrichtung gemäß Anspruch 10,
wobei der Seitenwandabschnitt des Hauptkörperabschnitts des Steuereinrichtungskörpers ein Eingriffselement aufweist,
wobei der Verbinderkopf aufweist:
ein Gehäuse,
ein oder mehrere elektrische Kontaktelemente, die aus dem Gehäuse freiliegen, und
ein korrespondierendes Eingriffselement, das an dem Gehäuse und gegenüber dem einen oder den mehreren elektrischen Kontaktelementen des Verbinderkopfes derart angeordnet ist, dass der Verbinderkopf durch Eingriff des korrespondierenden Eingriffselements des Verbinderkopfes mit dem Eingriffselement des Seitenwandabschnitts des Hauptkörperabschnitts lösbar an dem Seitenwandabschnitt des Hauptkörperabschnitts anbringbar ist, wobei das eine oder die mehreren elektrischen Kontaktelemente des Verbinderkopfes senkrecht von dem Seitenwandabschnitt des Hauptkörperabschnitts weg ausgerichtet sind.

12. Steuereinrichtung gemäß Anspruch 11,
wobei das Eingriffselement des Seitenwandabschnitts des Hauptkörperabschnitts eine Metallplatte aufweist und das korrespondierende Eingriffselement des Verbinderkopfes einen Magneten aufweist, oder
wobei das Eingriffselement des Seitenwandabschnitts des Hauptkörperabschnitts einen Magneten aufweist und das korrespondierende Eingriffselement des Verbinderkopfes ein Metallelement aufweist.

13. Steuereinrichtung gemäß Anspruch 11,
wobei das Gehäuse des Verbinderkopfes eine Kabeleinführöffnung für einen Endabschnitt des in dem Gehäuse aufzunehmenden flexiblen Kabels und eine oder mehrere Kontaktelementöffnungen für das eine oder die mehreren aus dem Gehäuse freizulegenden elektrischen Kontaktelemente aufweist, wobei die Kabeleinführöffnung und die eine oder mehreren Kontaktelementöffnungen auf einer ersten Seite des Gehäuses sind,
wobei das korrespondierende Eingriffselement an einer zweiten Seite des Gehäuses angeordnet ist, wobei die zweite Seite der ersten Seite des Gehäuses gegenüberliegt,
wobei das Gehäuse des Verbinderkopfes eine Eingriffselementöffnung an der zweiten Seite des Gehäuses aufweist, um das korrespondierende Eingriffselement zum Eingriff mit dem Eingriffselement des Seitenwandabschnitts des Hauptkörperabschnitts freizulegen.

14. Steuereinrichtung gemäß irgendeinem der Ansprüche 1 bis 13,
wobei das Randsegment der Rückfläche, das die Grenze zwischen dem Hauptkörperabschnitt und dem Stützplattenabschnitt begrenzt, ein gerades Randsegment ist,
wobei die Verschiebeachse der Verlängerungseinheit parallel zu dem geraden Randsegment ist,
wobei der Steuereinrichtungskörper einen Anschlagabschnitt aufweist, der sich von der Rückfläche des Stützplattenabschnitts entlang eines ersten Querrandsegments der Rückfläche aufrecht erstreckt, wobei das erste Querrandsegment senkrecht zu dem geraden Randsegment der Rückfläche ist,
wobei das Anschlagelement der Verlängerungseinheit dem Anschlagabschnitt auf eine Weise gegenüberliegt, um entlang der Verschiebeachse von einem zweiten Querrandsegment der Rückfläche des Stützplattenabschnitts weg oder zu diesem hin verschiebbar zu sein, wobei das zweite Querrandsegment dem ersten Querrandsegment gegenüberliegt,
wobei der Anschlagabschnitt des Steuereinrichtungskörpers und das Anschlagelement der Verlängerungseinheit betätigbar sind, um zusammenwirkend zwei gegenüberliegende Seiten der tragbaren elektronischen Vorrichtung in Eingriff zu bringen, um die Steuereinrichtung lösbar an der tragbaren elektronischen Vorrichtung anzubringen.

15. Steuereinrichtung gemäß irgendeinem der Ansprüche 1 bis 14, ferner aufweisend einen Schalter für eine Bluetooth-Verbindung an dem Stützplattenabschnitt,
wobei der Schalter durch die Verlängerungseinheit betätigbar ist, um die Bluetooth-Verbindung einzuschalten, wenn die Verlängerungseinheit von dem Stützplattenabschnitt aus verlängert ist, und um die Bluetooth-Verbindung auszuschalten, wenn die Verlängerungseinheit in den Stützplattenabschnitt zurückgezogen ist.

## Revendications

1. Dispositif de commande (102, 104) pour un dispositif électronique portable, le dispositif de commande comprenant :
un corps de dispositif de commande (110) comprenant
une partie de corps principal (112) ayant une surface de commande (114) avec un ou plusieurs éléments d'entrée (116), et
une partie de panneau de support (122) s'étendant latéralement à partir de la partie de corps principal, la partie de panneau de support ayant une surface arrière (124) dirigée dans une même direction que la surface de commande de la partie de corps principal, dans lequel la surface arrière a un segment de bord (126) délimitant une limite entre la partie de corps principal et la partie de panneau de support ; et
une unité d'extension (132) couplée de manière coulissante à la partie de panneau de support du corps de dispositif de commande de manière à pouvoir coulisser par rapport à la partie de panneau de support le long d'un axe de coulissement (131) parallèle à la surface arrière de la partie de panneau de support, dans lequel l'unité d'extension comprend
un bras d'extension (134), et
un élément d'arrêt (136) à une extrémité extérieure (134a) du bras d'extension exposée à l'extérieur de la partie de panneau de support,
dans lequel le bras d'extension est extensible de manière rétractable à partir de la partie de panneau de support de manière à faire coulisser l'élément d'arrêt le long de l'axe de coulissement à l'écart de la partie de panneau de support ou vers celle-ci,
dans lequel l'élément d'arrêt de l'unité d'extension peut être étendu de manière rétractable depuis l'extrémité extérieure du bras d'extension le long d'un axe d'extension (135) s'étendant perpendiculairement à partir du bras d'extension, l'axe d'extension étant perpendiculaire à la surface arrière de la partie de panneau de support,
dans lequel l'élément d'arrêt comprend une partie en surplomb (138) s'étendant sur une région du bras d'extension dans une direction depuis l'extrémité extérieure du bras d'extension vers une extrémité intérieure (134b) du bras d'extension,
dans lequel l'élément d'arrêt de l'unité d'extension peut être actionné pour serrer le dispositif électronique portable dans un sens de l'épaisseur du dispositif électronique portable afin de fixer de manière amovible le dispositif de commande au dispositif électronique portable.

2. Dispositif de commande selon la revendication 1, dans lequel l'unité d'extension comprend un mécanisme de sollicitation d'élément d'arrêt couplé entre l'élément d'arrêt et l'extrémité extérieure du bras d'extension pour exercer une force de sollicitation contre l'extension de l'élément d'arrêt le long de l'axe d'extension perpendiculairement à l'écart du bras d'extension.

3. Dispositif de commande selon la revendication 2, dans lequel le mécanisme de sollicitation d'élément d'arrêt comprend :
un support de coulisseau fixé de manière fixe à l'élément d'arrêt de manière à être situé à une base de l'élément d'arrêt, le support de coulisseau comportant un élément coulissant,
au moins un élément de guidage de coulisseau allongé s'étendant perpendiculairement à l'écart de l'extrémité extérieure du bras d'extension dans une direction parallèle à l'axe d'extension de l'élément d'arrêt, dans lequel l'élément d'arrêt est placé sur ledit au moins un élément de guidage de coulisseau allongé avec l'élément coulissant du support de coulisseau en prise coulissante avec ledit au moins un élément de guidage de coulisseau allongé,
au moins un dispositif de retenue de ressort à une extrémité dudit au moins un élément de guidage de coulisseau allongé, et
au moins un ressort de compression monté le long dudit au moins un élément de guidage de coulisseau allongé entre le support de coulisseau et ledit au moins un dispositif de retenue de ressort de telle manière qu'une première extrémité dudit au moins un ressort de compression bute contre le support de coulisseau et qu'une deuxième extrémité dudit au moins un ressort de compression est retenue par ledit au moins un dispositif de retenue de ressort,
dans lequel ledit au moins un ressort de compression est comprimé pour exercer une force de sollicitation afin d'écarter le support de coulisseau et ledit au moins un dispositif de retenue de ressort lorsque l'élément d'arrêt est étendu perpendiculairement à l'écart du bras d'extension le long de l'axe d'extension.

4. Dispositif de commande selon la revendication 3, dans lequel le mécanisme de sollicitation d'élément d'arrêt comprend
au moins un élément de guidage de ressort allongé disposé parallèlement audit au moins un élément de guidage de coulisseau allongé, une première extrémité dudit au moins un élément de guidage de ressort allongé étant couplée audit au moins un dispositif de retenue de ressort à l'extrémité dudit au moins un élément de guidage de coulisseau allongé,
dans lequel ledit au moins un élément de guidage de ressort allongé est inséré à travers ledit au moins un ressort de compression,
dans lequel le support de coulisseau comprend au moins un trou d'élément de guidage de ressort à travers lequel une deuxième extrémité dudit au moins un élément de guidage de ressort allongé est insérée de telle sorte que le support de coulisseau peut coulisser le long dudit au moins un élément de guidage de ressort allongé.

5. Dispositif de commande selon l'une quelconque des revendications 1 à 4, comprenant en outre un mécanisme de sollicitation de bras d'extension couplé entre la partie de panneau de support du corps de dispositif de commande et l'unité d'extension pour exercer une force de sollicitation contre l'extension de l'unité d'extension le long de l'axe de coulissement à l'écart de la partie de panneau de support.

6. Dispositif de commande selon la revendication 5,
dans lequel le bras d'extension de l'unité d'extension comprend une structure allongée insérée de manière coulissante dans la partie de panneau de support du corps de dispositif de commande de manière à s'étendre longitudinalement vers l'intérieur le long de l'axe de coulissement à l'intérieur de la partie de panneau de support,
dans lequel le mécanisme de sollicitation de bras d'extension comprend au moins un ressort de tension orienté parallèlement à l'axe de coulissement, une première extrémité dudit au moins un ressort de tension étant fixée à l'extrémité intérieure du bras d'extension de l'unité d'extension et une deuxième extrémité dudit au moins un ressort de tension étant fixée à la partie de panneau de support,
dans lequel le bras d'extension de l'unité d'extension comprend au moins une plaque en forme de L intégrée,
dans lequel une section plus longue de la plaque en forme de L est encastrée dans la structure allongée du bras d'extension avec une extrémité libre de la section plus longue de la plaque en forme de L couplée à la première extrémité dudit au moins un ressort de tension,
dans lequel une section de pied plus courte de la plaque en forme de L s'étend perpendiculairement à partir du bras d'extension pour former l'élément de guidage de coulisseau allongé avec ledit au moins un dispositif de retenue de ressort à une extrémité libre de la section de pied plus courte de la plaque en forme de L pour maintenir la deuxième extrémité dudit au moins un ressort de compression.

7. Dispositif de commande selon l'une quelconque des revendications 1 à 6, comprenant en outre un mécanisme de verrouillage d'extension pouvant être actionné pour verrouiller l'unité d'extension afin qu'elle ne puisse pas coulisser par rapport à la partie de panneau de support et pour déverrouiller l'unité d'extension de telle sorte que l'unité d'extension soit libre de coulisser par rapport à la partie de panneau de support.

8. Dispositif de commande selon la revendication 7,
dans lequel le mécanisme de verrouillage d'extension comprend un élément de verrouillage d'extension mobile entre une position de verrouillage pour venir en prise avec l'unité d'extension pour le verrouillage et une position rétractée pour venir hors prise de l'unité d'extension pour le déverrouillage.

9. Dispositif de commande selon la revendication 8,
dans lequel l'élément de verrouillage d'extension est chargé par ressort,
dans lequel le mécanisme de verrouillage d'extension comprend un élément poussoir pouvant être actionné pour pousser l'élément de verrouillage d'extension dans la position rétractée de manière à venir hors prise de l'unité d'extension et à libérer l'élément de verrouillage d'extension de telle sorte qu'une force chargée par ressort déplace l'élément de verrouillage d'extension dans la position de verrouillage pour venir en prise avec l'unité d'extension,
dans lequel le bras d'extension de l'unité d'extension comprend un agencement de verrouillage d'extension complémentaire.

10. Dispositif de commande selon l'une quelconque des revendications 1 à 9, comprenant en outre un ensemble de connecteur s'étendant depuis la partie de panneau de support du corps de dispositif de commande, l'ensemble de connecteur comprenant
une tête de connecteur, et
un câble flexible s'étendant depuis la partie de panneau de support du corps de dispositif de commande jusqu'à la tête de connecteur,
dans lequel la tête de connecteur est configurée pour être fixable de manière amovible à une section de paroi latérale de la partie de corps principal du corps de dispositif de commande, la section de paroi latérale étant perpendiculaire à la surface arrière de la partie de panneau de support le long de la limite entre la partie de corps principal et la partie de panneau de support.

11. Dispositif de commande selon la revendication 10,
dans lequel la section de paroi latérale de la partie de corps principal du corps de dispositif de commande comprend un élément de prise,
dans lequel la tête de connecteur comprend
un boîtier,
un ou plusieurs éléments de contact électrique exposés à partir du boîtier, et
un élément de prise correspondant disposé au niveau du boîtier et à l'opposé dudit un ou desdits plusieurs éléments de contact électrique de la tête de connecteur de telle manière que la tête de connecteur puisse être fixée de manière amovible à la section de paroi latérale de la partie de corps principal, en mettant en prise l'élément de prise correspondant de la tête de connecteur avec l'élément de prise de la section de paroi latérale de la partie de corps principal, avec ledit un ou lesdits plusieurs éléments de contact électrique de la tête de connecteur dirigés perpendiculairement à l'écart de la section de paroi latérale de la partie de corps principal.

12. Dispositif de commande selon la revendication 11,
dans lequel l'élément de prise de la section de paroi latérale de la partie de corps principal comprend une plaque métallique et l'élément de prise correspondant de la tête de connecteur comprend un aimant, ou
dans lequel l'élément de prise de la section de paroi latérale de la partie de corps principal comprend un aimant et l'élément de prise correspondant de la tête de connecteur comprend un élément métallique.

13. Dispositif de commande selon la revendication 11,
dans lequel le boîtier de la tête de connecteur comprend une ouverture d'entrée de câble pour une partie d'extrémité du câble flexible à loger à l'intérieur du boîtier et une ou plusieurs ouvertures d'élément de contact pour ledit un ou lesdits plusieurs éléments de contact électrique à exposer à partir du boîtier, l'ouverture d'entrée de câble et ladite une ou lesdites plusieurs ouvertures d'élément de contact étant situées sur un premier côté du boîtier,
dans lequel l'élément de prise correspondant est disposé sur un deuxième côté du boîtier, le deuxième côté étant opposé au premier côté du boîtier,
dans lequel le boîtier de la tête de connecteur comprend une ouverture d'élément de prise sur le deuxième côté du boîtier pour exposer l'élément de prise correspondant pour venir en prise avec l'élément de prise de la section de paroi latérale de la partie de corps principal.

14. Dispositif de commande selon l'une quelconque des revendications 1 à 13,
dans lequel le segment de bord de la surface arrière délimitant la limite entre la partie de corps principal et la partie de panneau de support est un segment de bord droit,
dans lequel l'axe de coulissement de l'unité d'extension est parallèle au segment de bord droit,
dans lequel le corps de dispositif de commande comprend une partie d'arrêt s'étendant verticalement à partir de la surface arrière de la partie de panneau de support le long d'un premier segment de bord transversal de la surface arrière, le premier segment de bord transversal étant perpendiculaire au segment de bord droit de la surface arrière,
dans lequel l'élément d'arrêt de l'unité d'extension est opposé à la partie d'arrêt de manière à pouvoir coulisser le long de l'axe de coulissement en s'éloignant ou en se rapprochant d'un deuxième segment de bord transversal de la surface arrière de la partie de panneau de support, le deuxième segment de bord transversal étant opposé au premier segment de bord transversal,
dans lequel la partie d'arrêt du corps de commande et l'élément d'arrêt de l'unité d'extension peuvent être actionnés pour mettre en prise de manière coopérative deux côtés opposés du dispositif électronique portable afin de fixer de manière amovible le dispositif de commande au dispositif électronique portable.

15. Dispositif de commande selon l'une quelconque des revendications 1 à 14, comprenant en outre un commutateur pour une connexion Bluetooth au niveau de la partie de panneau de support,
dans lequel le commutateur peut être actionné par l'unité d'extension pour activer la connexion Bluetooth lorsque l'unité d'extension est étendue à partir de la partie de panneau de support et pour désactiver la connexion Bluetooth lorsque l'unité d'extension est rétractée dans la partie de panneau de support.
